# EUROPEAN PATENT APPLICATION

(11) **EP 4 843 375 A1**
(43) Date of publication of application: **25.11.2026**
(21) Application number: 25741548.9
(22) Date of filing: 15.01.2025
(51) Int. Cl.: A01D 34/00

(54) **CONTROL METHOD FOR SELF-MOVING LAWN MOWING DEVICE**

(30) Priority: 15.01.2024 CN 202410056655
(71) Applicant: Positec Power Tools (Suzhou) Co., Ltd., Suzhou, Jiangsu 215123 (CN)
(72) Inventor: LU, Shuailong, Suzhou, Jiangsu 215123 (CN); CHEN, Yu, Suzhou, Jiangsu 215123 (CN); YANG, Litao, Suzhou, Jiangsu 215123 (CN)
(74) Representative: Mishcon de Reya LLP
(86) International application number: PCT/CN2025/072581
(87) International publication number: WO 2025/152987

(57) **Abstract**

The present application discloses a control method for an autonomous mowing device, applied to a cutting scenario of a dense grass area. The method includes: acquiring load information of a cutting motor; in response to the load information satisfying a first preset condition, raising a height of a cutting deck relative to the ground; controlling the autonomous mowing device to continue mowing operation at the raised height of the cutting deck; in response to the load information satisfying a second preset condition, lowering the height of the cutting deck relative to the ground and controlling a moving assembly to turn by a preset angle; controlling the autonomous mowing device to perform mowing operation on a first path at the lowered height of the cutting deck; wherein the first path refers to a path along which the autonomous mowing device has moved at the raised height of the cutting deck.

## Description

### Technical Field

The present application is in the field of lawn mowing robots, and in particular, to a control method for an autonomous mowing device.

### Background Art

When a lawn mowing robot works within a working area, due to the influence of a cutting height of a cutting deck set by a user and an actual height of grass, a phenomenon may occur in which the lawn mowing robot cannot cut a dense grass area (also referred to as an overloaded area, such as a lawn area with a high growth density or high grass height).

However, existing operation control methods abandon cutting of the dense grass area, thus causing local grass omission, thereby reducing coverage rate of treatment for the dense grass area.

### Summary of the Invention

Based on this, it is necessary to provide a control method for an autonomous mowing device to address the above technical problem.

To achieve the above object:
In a first aspect, an embodiment of the present application provides a control method for an autonomous mowing device, the method comprises: acquiring load information of a cutting motor; in response to the load information satisfying a first preset condition, raising a height of a cutting deck relative to the ground; the first preset condition indicating that the autonomous mowing device enters an overloaded area; controlling the autonomous mowing device to continue mowing operation at the raised height of the cutting deck; in response to the load information satisfying a second preset condition, lowering the height of the cutting deck relative to the ground and controlling a moving assembly to turn by a preset angle; controlling the autonomous mowing device to perform mowing operation on a first path at the lowered height of the cutting deck; wherein the first path refers to a path along which the autonomous mowing device has moved at the raised height of the cutting deck.

In a possible implementation, the second preset condition at least comprises a condition indicating that the autonomous mowing device passes through the overloaded area.

In a possible implementation, indicating that the mowing device passes through the overloaded area comprises one of the following:
(1) a load is less than a first preset load;
(2) the load is less than the first preset load, and a duration of continuous operation during which the load is less than the first preset load satisfies a preset time; or, the load is less than the first preset load, and a distance of continuous operation during which the load is less than the first preset load satisfies a preset length; or, the load is less than the first preset load, and the duration of continuous operation during which the load is less than the first preset load satisfies a preset duration and a distance of operation during which the load is less than the first preset load satisfies a preset distance;
(3) the autonomous device moves to an end point of a target path.

In a possible implementation, the target path refers to a path that terminates at a boundary of a working area.

In a possible implementation, the preset angle is 180 degrees or 90 degrees.

In a possible implementation, raising the height of the cutting deck relative to the ground comprises one of the following:
(a) controlling the cutting deck to be raised to a maximum height;
(b) controlling the cutting deck to be raised step by step according to a graduated lifting strategy; wherein the graduated lifting strategy comprises a fixed height value raising rule and a non-fixed height value raising rule.

In a possible implementation, controlling the cutting deck to be raised step by step according to the graduated lifting strategy comprises: controlling the cutting deck to be raised by a non-fixed height value.

In a possible implementation, controlling the cutting deck to be raised by the non-fixed height value comprises:
determining a height value to be raised according to a current height of the cutting deck, and/or according to a difference between the current height and a target height, and controlling the cutting deck to be raised from the current height to a corresponding height according to the height value to be raised.

In a possible implementation, the height value to be raised is inversely correlated with the current height; or, the height value to be raised is positively correlated with the difference between the current height and the target height.

In a possible implementation, the method further comprises:
judging whether the corresponding height after raising according to the graduated lifting strategy is greater than a maximum height to which the cutting deck can be raised, and when yes, controlling the cutting deck to be raised to the maximum height.

In a possible implementation, the method further comprises:
judging whether the first path is a re-cutting path; wherein the re-cutting path refers to a path on which the autonomous mowing device has performed mowing operation on at least a portion of the first path at the lowered height of the cutting deck;
when yes, marking the first path and waiting for subsequent processing; when not, executing the step of controlling the mowing device to perform mowing operation on the first path at the lowered height of the cutting deck.

In a possible implementation, in response to the load information satisfying the second preset condition, lowering the height of the cutting deck relative to the ground comprises: judging whether a difference between a current height of the cutting deck and a height set by a user satisfies a threshold condition, when yes, controlling the autonomous mowing device to lower the cutting deck to the height set by the user, and continuing to work;
when not, executing the step of controlling the autonomous mowing device to perform mowing operation on the first path at the lowered height of the cutting deck.

In a possible implementation, before the step of raising the height of the cutting deck relative to the ground, the method further comprises: taking at least one of the following pre-measures to attempt to pass through the overloaded area;
A: reducing a moving speed of the autonomous mowing device;
B: controlling the autonomous mowing device to reverse by a preset distance or for a preset time.

In a possible implementation, when the mowing device adopts the pre-measure B, the method further comprises: after reversing by the preset distance or for the preset time, controlling the autonomous device to continue moving forward; judging whether a forward distance is greater than a reversed distance; when not, executing the step of raising the height of the cutting deck relative to the ground.

In a possible implementation, before raising the height of the cutting deck relative to the ground, the method further comprises: controlling the cutting deck to stop working and controlling the mowing device to stop moving.

In a possible implementation, reducing the moving speed of the mowing device comprises:
reducing the moving speed of the mowing device step by step according to a preset gradient speed reduction rule until the moving speed of the mowing device is reduced to a lowest speed.

In a possible implementation, the method further comprises:
in response to the load information satisfying a third preset condition, controlling the mowing device to reduce the moving speed.

In a possible implementation, the method further comprises:
in response to the load information satisfying a fourth preset condition, reversing by a set distance d, and then moving forward.

In a possible implementation, controlling the autonomous mowing device to reduce the moving speed comprises: controlling the autonomous mowing device to reduce the moving speed according to a preset relationship between a moving speed of the autonomous mowing device and a load.

An embodiment of the present application provides a control method for an autonomous mowing device, applied to a cutting scenario of a dense grass area; the method comprises: acquiring load information of a cutting motor; in response to the load information satisfying a first preset condition, raising a height of a cutting deck relative to the ground; controlling the autonomous mowing device to continue mowing operation at the raised height of the cutting deck; in response to the load information satisfying a second preset condition, lowering the height of the cutting deck relative to the ground and controlling a moving assembly to turn by a preset angle; controlling the autonomous mowing device to perform mowing operation on a first path at the lowered height of the cutting deck; the first path refers to a path along which the autonomous mowing device has moved at the raised height of the cutting deck. In this way, coverage rate of treatment for the dense grass area is improved, and a cutting effect in a dense grass working condition is consistent with a cutting effect in a normal working condition.

In a second aspect, an embodiment of the present application provides a control method for an autonomous mowing device, wherein the method comprises:
acquiring load information of a cutting motor;
in response to the load information satisfying a first preset condition, controlling a cutting deck to be raised, wherein the first preset condition is indicating that the autonomous mowing device enters an overloaded area;
controlling the autonomous mowing device to perform mowing operation on the overloaded area at the raised height of the cutting deck;
in response to the load information satisfying a second preset condition, judging whether a difference between a height of the cutting deck of the autonomous mowing device after being lowered and a height set by a user is within a threshold range; wherein the second preset condition is indicating that the autonomous mowing device passes through the overloaded area by means of raising the cutting deck;
when yes, controlling the autonomous mowing device to lower the cutting deck to a target height, and continuing to work at the lowered height of the cutting deck.

In a possible implementation, the method further comprises:
when not, controlling the mowing device to perform mowing operation on the overloaded area at the lowered height of the cutting deck.

In a third aspect, an embodiment of the present application provides an operation control method, applied to an autonomous mowing device, the autonomous mowing device comprising a cutting deck with an adjustable height relative to the ground, the method comprising: in response to entering a dense grass cutting mode, raising the height of the cutting deck relative to the ground, and performing mowing operation at the raised height of the cutting deck relative to the ground; the height of the cutting deck relative to the ground representing a height of the cutting deck relative to the ground;
detecting an operating parameter of the autonomous mowing device, and if a state in which a cutting load represented by the operating parameter is less than a first preset load satisfies a preset condition, controlling the autonomous mowing device to turn by a preset angle, and lowering the height of the cutting deck relative to the ground to perform mowing operation;
upon detecting that the height of the cutting deck relative to the ground is equal to a preset expected cutting height or upon detecting that a difference between the height of the cutting deck relative to the ground and the expected cutting height is within a preset error range, exiting the dense grass cutting mode.

In a fourth aspect, an embodiment of the present application provides an autonomous mowing device, comprising: a processor, a memory, and a computer program stored on the memory and executable by the processor, wherein when the computer program is executed by the processor, the steps of the above operation control method are implemented.

In a possible implementation, the autonomous mowing device further comprises a mowing assembly and an adjustment assembly for adjusting the height of the mowing assembly relative to the ground;
the processor is configured to control the mowing assembly and the adjustment assembly.

In a fifth aspect, an embodiment of the present application provides a computer-readable storage medium, wherein the computer-readable storage medium stores a computer program, and the computer program is loaded and executed by a processor to implement the steps of the above operation control method.

In the operation control method, the autonomous mowing device, and the storage medium provided by the embodiments of the present application, the method is applied to an autonomous mowing device, the autonomous mowing device comprising a cutting deck with an adjustable height relative to the ground, the method comprising: in response to entering a dense grass cutting mode, raising the height of the cutting deck relative to the ground, and performing mowing operation at the raised height of the cutting deck relative to the ground; the height of the cutting deck relative to the ground representing a height of the cutting deck relative to the ground; detecting an operating parameter of the autonomous mowing device, and if a state in which a cutting load represented by the operating parameter is less than a first preset load satisfies a preset condition, controlling the autonomous mowing device to turn by a preset angle, and lowering the height of the cutting deck relative to the ground to perform mowing operation; wherein upon detecting that the height of the cutting deck relative to the ground is equal to a preset expected cutting height or upon detecting that a difference between the height of the cutting deck relative to the ground and the expected cutting height is within a preset error range, exiting the dense grass cutting mode. In this way, after entering the dense grass cutting mode, the height of the cutting deck relative to the ground is adaptively adjusted according to the operating parameter of the autonomous mowing device, and then the autonomous mowing device is controlled to perform mowing operation on the dense grass area at the adjusted height of the cutting deck relative to the ground, so that the dense grass area can be effectively cut, no missed cutting area is generated, and manual operation is not required, thereby improving coverage rate of treatment for the dense grass area.

### Brief Description of the Drawings

FIG. 1 is a schematic diagram of an autonomous mowing device working within a working area in the prior art;
FIG. 2 is a schematic structural diagram of the autonomous mowing device according to an embodiment of the present application;
FIG. 3 is a schematic flowchart of an operation control method according to an embodiment of the present application;
FIG. 4 is a first schematic diagram of operation of an autonomous mowing device according to an embodiment of the present application;

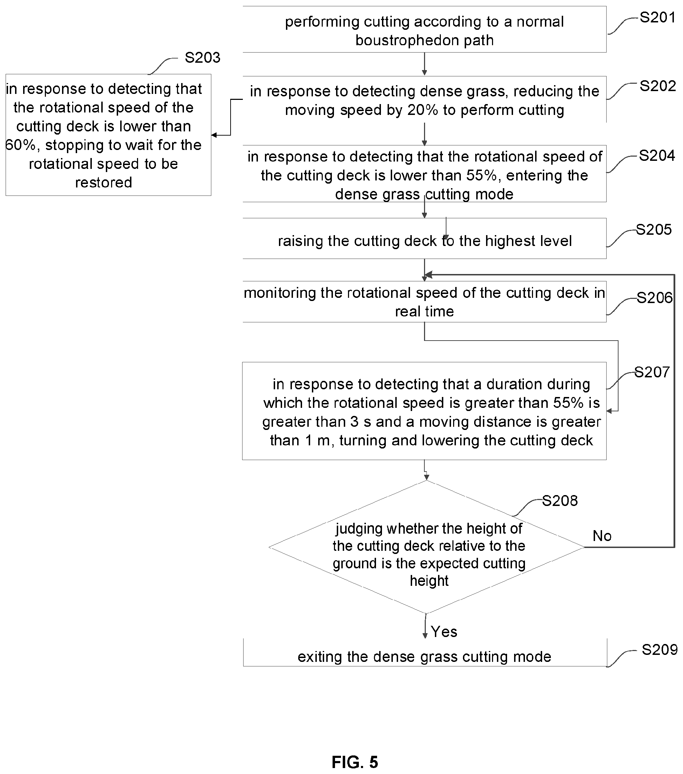

FIG. 5 is a specific schematic flowchart of an operation control method according to an embodiment of the present application;
FIG. 6 is a schematic flowchart of a control method for an autonomous mowing device according to an embodiment of the present application;
FIGS. 7 to 10 are respectively schematic diagrams of re-cutting manners of an autonomous mowing device according to embodiments of the present application;
FIG. 12 is a specific schematic flowchart of a control method for an autonomous mowing device according to an embodiment of the present application;
FIG. 13 is a schematic diagram of a feasible scheme for gradient raising of a cutting deck according to an embodiment of the present application.

### Detailed Description

Exemplary embodiments will be described in detail herein, examples of which are shown in the accompanying drawings. When the following description refers to the accompanying drawings, the same numerals in different drawings represent the same or similar elements unless otherwise indicated. The embodiments described in the following exemplary embodiments do not represent all embodiments consistent with the present application. Rather, they are merely examples of apparatuses and methods consistent with some aspects of the present application as detailed in the appended claims.

It should be noted that, in this document, the terms "comprises," "comprising," or any other variation thereof are intended to cover a non-exclusive inclusion, such that a process, method, article, or apparatus that comprises a list of elements includes not only those elements but also other elements not expressly listed, or also includes elements inherent to such process, method, article, or apparatus. Without more constraints, an element defined by the phrase "comprising a ..." does not exclude the presence of additional identical elements in the process, method, article, or apparatus that comprises the element. In addition, components, features, and elements having the same name in different embodiments of the present application may have the same meaning or may have different meanings, and the specific meaning thereof should be determined according to the explanation in the specific embodiment or in combination with the context in the specific embodiment.

It should be understood that, although the terms first, second, third, etc. may be used in this document to describe various pieces of information, such information should not be limited to these terms. These terms are only used to distinguish the same type of information from each other. For example, without departing from the scope of this document, first information may also be referred to as second information, and similarly, second information may also be referred to as first information. Depending on the context, the word "if" as used herein may be interpreted as "at the time of" or "when" or "in response to determining". Furthermore, as used herein, the singular forms "a," "an," and "the" are intended to include the plural forms as well, unless the context indicates otherwise. It should be further understood that the terms "comprises" and "comprising" indicate the presence of the described features, steps, operations, elements, components, items, categories, and/or groups, but do not exclude the presence, appearance, or addition of one or more other features, steps, operations, elements, components, items, categories, and/or groups. The terms "or" and "and/or" used herein are construed as inclusive, or meaning any one or any combination. Therefore, "A, B, or C" or "A, B, and/or C" means "any one of the following: A; B; C; A and B; A and C; B and C; A, B, and C." This definition will only occur when combinations of elements, functions, steps, or operations are inherently mutually exclusive in some manner.

It should be understood that, although the steps in the flowcharts of the embodiments of the present application are shown sequentially as indicated by arrows, these steps are not necessarily performed sequentially in the order indicated by the arrows. Unless explicitly stated herein, the execution of these steps is not strictly limited in order, and they may be performed in other orders. Moreover, at least a portion of the steps in the figures may include multiple sub-steps or multiple stages, and these sub-steps or stages are not necessarily performed and completed at the same time, but may be performed at different times, and the order of execution thereof is not necessarily sequential, but may be performed alternately or alternately with other steps or at least a portion of sub-steps or stages of other steps.

It should be noted that, in this document, step codes such as S101 and S102 are used, and the purpose thereof is to more clearly and concisely express the corresponding content, and does not constitute a substantive limitation on the order. Those skilled in the art may perform S102 first and then S101 during specific implementation, but these should all fall within the protection scope of the present application.

It should be understood that the specific embodiments described herein are merely for explaining the present application and are not intended to limit the present application.

In the following description, suffixes used to represent elements, such as "module," "component," or "unit," are only for facilitating the description of the present application and have no specific meaning per se. Therefore, "module," "component," or "unit" may be used interchangeably.

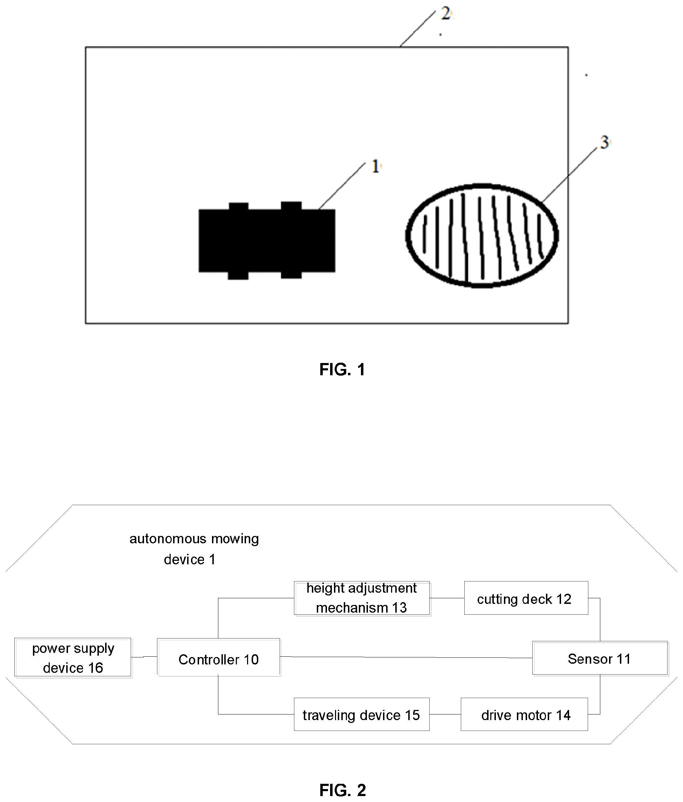

As shown in FIG. 1, an autonomous mowing device 1 in an embodiment of the present disclosure can move autonomously within a working area 2 to automatically perform a mowing operation task. Referring to FIG. 2, the autonomous mowing device 1 may include a controller 10, a sensor 11, a cutting assembly (e.g., a cutting deck 12), a height adjustment mechanism 13, a drive motor 14, a traveling device 15, and a power supply device 16, wherein the sensor 11 is in signal connection with the cutting deck 12 and the drive motor 14, and is configured to detect loads such as a rotational speed of the cutting deck 12 and a torque of the drive motor 14; the controller 10 is in signal connection with the sensor 11 and the height adjustment mechanism 13, and is configured to receive load data detected by the sensor 11 and to trigger the height adjustment mechanism 13 to adjust a height of the cutting deck 12 relative to the ground; the height adjustment mechanism 13 is in signal connection with the cutting deck 12, and is configured to raise or lower the height of the cutting deck 12 relative to the ground; the drive motor 14 is in signal connection with the cutting deck 12 and the traveling device 15, and is configured to provide power for rotation of the cutting deck 12 and movement of the traveling device 15; the power supply device 16 is configured to provide energy required for operation of the controller 10, the sensor 11, the cutting deck 12, the height adjustment mechanism 13, the drive motor 14, and the traveling device 15.

It should be noted that the drive motor 14 may include a cutting motor for providing power for rotation of the cutting deck 12 and a wheel motor for providing power for movement of the traveling device 15; the cutting motor and the wheel motor are two separate motors (or two motor groups) for respectively implementing rotation of the cutting deck 12 and movement of the traveling device 15; of course, in some embodiments, the cutting motor and the wheel motor may also be one motor, i.e., rotation of the cutting deck 12 and movement of the traveling device 15 are implemented through one motor (or one motor group); this is not limited in this embodiment.

It can be understood that a dense grass area may exist within the working area 2, wherein the dense grass area refers to a working area in which a load of the autonomous mowing device exceeds a preset load threshold due to a density of grass reaching a certain degree and/or a height of grass reaching a certain height. If mowing operation is performed on the dense grass area according to a normal working mode, when the height of grass is higher than a cutting height of the cutting deck set by the user by a certain height and/or the density of grass reaches a certain degree, a cutting load of the autonomous mowing device may exceed a preset load threshold, i.e., an overload phenomenon occurs. To address the above problem, an existing technical solution is: detecting the rotational speed and torque of the cutting deck in real time, and when a threshold is reached, marking an area in front of the autonomous mowing device as a dense grass area, abandoning cutting, and re-planning a cutting path. For example, with continued reference to FIG. 1, when the autonomous mowing device 1 works to a dense grass area 3, cutting of the dense grass area 3 is abandoned.

Therefore, there is a problem in the prior art that needs to be solved regarding how to cut the dense grass area, so as to improve coverage rate of treatment for the dense grass area.

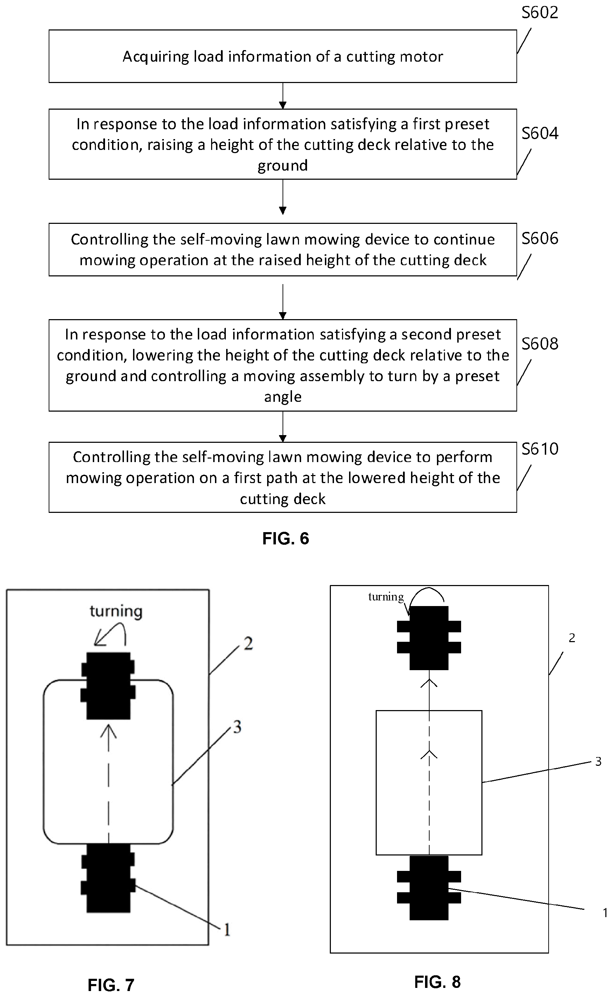

In view of this, as shown in FIG. 6, the present application proposes a control method for an autonomous mowing device. It should be noted that although the present disclosure provides method operation steps as in the following embodiments or as shown in the accompanying drawings, for steps that are not logically causally necessary, the execution order of these steps is not limited to the execution order provided in the embodiments of the present disclosure.

Referring to FIG. 6, which is a control method for an autonomous mowing device according to an embodiment of the present application, the method may be performed by an operation control apparatus, which may be implemented in software and/or hardware. In this embodiment, the execution subject of the method is an autonomous mowing device, and the autonomous mowing device includes a cutting deck with an adjustable height relative to the ground as an example. The method provided by this embodiment includes:
S602: load information of a cutting motor is acquired.

The load information may be characterized by various parameters, such as mechanical parameters like rotational speed and torque, electrical parameters like current and voltage, or image parameters. Therefore, in some embodiments, the load information of the cutting motor may be acquired by direct acquisition, for example, through a sensor monitoring operating parameters of the cutting motor (such as mechanical parameters like rotational speed and torque, or electrical parameters like voltage and current); of course, in some embodiments, the load information of the cutting motor may also be acquired indirectly, for example, through a vision sensor identifying the overloaded area to indirectly acquire the load information of the cutting motor.

It should be noted that there are many ways to acquire the load information of the cutting motor, including but not limited to the above methods, as long as the load condition of the cutting motor can be acquired, which is not limited in the present disclosure.

S604: in response to the load information satisfying a first preset condition, the height of the cutting deck relative to the ground is raised.

The first preset condition represents that the autonomous mowing device is overloaded, in other words, the first preset condition is used to indicate or represent that the autonomous mowing device enters an overloaded area (also referred to as a dense grass area).

The height of the cutting deck relative to the ground represents a height of the cutting deck relative to the ground.

In some embodiments, taking the rotational speed of the cutting deck as an example of a representation of the load information, the first preset condition may be, for example, that the rotational speed is less than a rotational speed threshold, and the rotational speed threshold may be characterized by a percentage of a rotational speed value under no-load conditions, and the percentage may be set according to actual needs. For example, when the rotational speed is less than 90% of the rotational speed value under no-load conditions, the load information satisfies the first preset condition, and an action of raising the cutting deck is triggered. For another example, when the rotational speed is less than 60% of the rotational speed value under no-load conditions, the load information satisfies the first preset condition, and the action of raising the cutting deck is triggered. For another example, when the rotational speed is less than 55% of the rotational speed value under no-load conditions, the load information satisfies the first preset condition, and the action of raising the cutting deck is triggered.

By raising the cutting deck in response to the load, resistance encountered by the autonomous device can be reduced, so that the rotational speed of the cutting deck can be restored, allowing the autonomous mowing device to continue working without stopping, which is conducive to passing through the dense grass area.

S606: the autonomous mowing device is controlled to continue mowing operation at the raised height of the cutting deck.

It can be understood that since the density at a corresponding height is generally lower when the height of grass is higher, when encountering the overloaded area, the autonomous mowing device can raise the height of the cutting deck relative to the ground and perform mowing operation at the raised height of the cutting deck relative to the ground, so as to reduce the amount of grass cut, thereby reducing the cutting load to cope with the overload condition.

S608: in response to the load information satisfying a second preset condition, the height of the cutting deck relative to the ground is lowered and a moving assembly is controlled to turn by a preset angle.

The second preset condition represents that the autonomous mowing device passes through the overloaded area, in other words, the second preset condition at least comprises a condition indicating that the autonomous mowing device passes through the overloaded area. In some embodiments, the second preset condition is used to indicate that the autonomous mowing device passes through the overloaded area by means of raising the cutting deck.

In some embodiments, indicating that the autonomous mowing device passes through the overloaded area comprises one of the following:
a load (Nact) is less than a first preset load (N0).

In some embodiments, a state in which the load undergoes a sudden change may be used to indicate that the autonomous mowing device passes through the overloaded area; wherein the sudden change in the load may be characterized by the load being less than the first preset load, and the first preset load may be set to a load close to no-load. For ease of understanding, the load is represented by the rotational speed as an example, and the first preset load is represented by a percentage of the rotational speed under no-load conditions, and the percentage can be set according to user requirements; for example, if the rotational speed is greater than 90% of the rotational speed under no-load conditions, it is determined that the autonomous mowing device passes through the overloaded area.

At this time, the autonomous mowing device immediately turns and lowers the cutting deck to perform mowing operation (re-cutting) on the dense grass area.

(2) the load is less than the first preset load, and a duration of continuous operation during which the load is less than the first preset load satisfies a preset time; or, the load is less than the first preset load, and a distance of continuous operation during which the load is less than the first preset load satisfies a preset length; or, the load is less than the first preset load, and the duration of continuous operation during which the load is less than the first preset load satisfies a preset duration and a distance of operation during which the load is less than the first preset load satisfies a preset distance.

Considering that a sparse grass area may quickly appear in the dense grass area, causing a sudden change in the load, if only the load being less than the first preset load is used as a criterion, the autonomous mowing device may immediately turn as soon as it enters the overloaded area, affecting cutting efficiency and user experience. Therefore, in order to improve the reliability of passing through the dense grass area, in some embodiments, the load being less than the first preset load is used in combination with the load being less than the first preset load as a continuous state to determine that the overloaded area has been stably passed through. For example, the load is less than the first preset load, and the state in which the load is less than the first preset load can continue for a period of time and/or a distance to indicate that the overloaded area has been passed through.

The preset duration and the preset distance may be set according to lawn conditions. In some embodiments, the preset duration may be set to, for example, 3 seconds; the preset distance may be set to, for example, 1 m. the autonomous device moves to an end point of a target path.

Considering that the overloaded area may extend to an end point on a boundary of the working area, in this case, the load may not undergo a sudden change, and at this time, the autonomous device moves to the end point of the overloaded area, indicating that the autonomous device passes through the overloaded area.

In addition to the above solution in which the overloaded area extends to the end point, the autonomous device moving to the end point of the target path may also include: the load is less than the first preset load, and the autonomous device moves to the end point of the target path while the load is less than the first preset load.

In some embodiments, the target path refers to a path that terminates at a boundary of a working area.

For example, the working area may be a path within the working area; in this case, the target path may be a path (i.e., a current path) on which the mowing device in the working area is performing cutting work; for another example, the working area may be a local area within the working area, and in this case, the target path refers to a last path for completing cutting work of the local area in the working area; for another example, the working area may also be a global area (the entire working area) in the working area, and in this case, the target path refers to a last path for completing the entire operating path of the working area.

For ease of understanding, taking the autonomous mowing device cutting the entire working area according to a planned boustrophedon path as an example: the target path may be a current boustrophedon path of the autonomous mowing device; or may be a last boustrophedon path of a certain local area; or may be a last boustrophedon path of the entire working area.

S610: the autonomous mowing device is controlled to perform mowing operation on a first path at the lowered height of the cutting deck.

The first path refers to a path along which the autonomous mowing device has moved at the raised height of the cutting deck.

At this time, controlling the autonomous mowing device to perform mowing operation on the first path at the lowered height of the cutting deck may also be referred to as re-cutting.

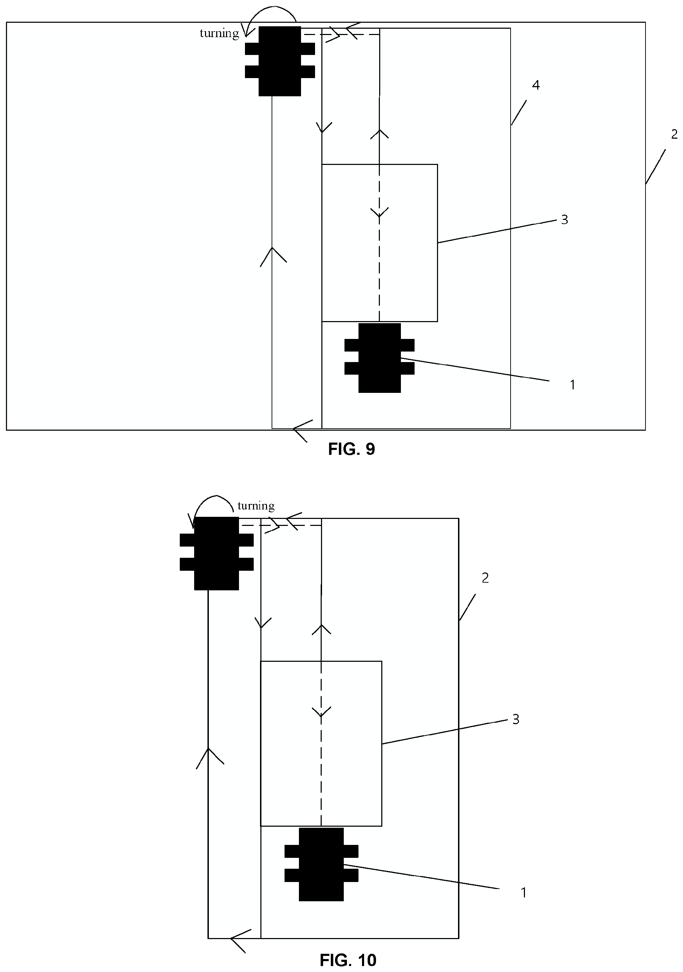

The present disclosure provides a control method. When encountering a dense grass area, the autonomous mowing device first raises the cutting deck to pass through the dense grass area; and after completely passing through the dense grass area, turns and lowers the cutting deck, so as to re-cut the dense grass area that was passed through by means of raising the cutting deck, thereby cutting the dense grass to a target height. The manner of re-cutting after completely passing through the dense grass area may be one of the following: as shown in FIG. 7, moving to an end point of a boundary of the dense grass area, then lowering the cutting deck and turning to immediately perform re-cutting (referred to as immediate re-cutting); as shown in FIG. 8, moving to an end point of a path on which the autonomous device operates according to a current planned path, then lowering the cutting deck and turning to return to the dense grass area for re-cutting (referred to as re-cutting after completing the current path; the dotted line indicates re-cutting of the dense grass); as shown in FIG. 9, moving to an end point of a local area, then lowering the cutting deck and turning to return to the dense grass area for re-cutting (referred to as re-cutting after completing the local area; reference numeral 4 denotes the local area; the dotted line indicates a re-cutting operation path); as shown in FIG. 10, moving to an end point of the entire area, then lowering the cutting deck and turning to return to the dense grass area for re-cutting (referred to as re-cutting after completing the entire area; the dotted line indicates a re-cutting path). In some embodiments, the preset angle ranges from greater than or equal to 90 degrees to less than or equal to 180 degrees.

In some embodiments, the preset angle is 180 degrees or 90 degrees.

The preset angle of 180 degrees is suitable for the immediate re-cutting and re-cutting after completing the current path solutions; the preset angle of 90 degrees is suitable for the re-cutting after completing the local area and re-cutting after completing the entire area solutions.

Of course, in some embodiments, the preset angle may also be other angle values, for example, in the re-cutting after completing the local area and re-cutting after completing the entire area solutions, turning by a preset angle is adopted so as to return to the dense grass area in a straight line toward a re-cutting point of the dense grass area for re-cutting.

Regarding how to raise the cutting deck, in some embodiments, the manner of raising the height of the cutting deck relative to the ground comprises one of the following:
controlling the cutting deck to be raised to a maximum height.

By raising the cutting deck to the maximum height, the load can be reduced to a minimum.
controlling the cutting deck to be raised step by step according to a graduated lifting strategy.

The graduated lifting strategy comprises a fixed height value raising rule and a non-fixed height value raising rule.

The fixed height value raising rule means that a height raised each time (Δh) is fixed, i.e., Δh is a constant value; while the non-fixed height value raising rule means that the height raised each time (Δh) is not fixed, i.e., Δh is a variable value.

In some embodiments, controlling the cutting deck to be raised step by step according to the graduated lifting strategy comprises:
controlling the cutting deck to be raised by a non-fixed height value, that is, controlling the cutting deck to be raised according to the non-fixed height value raising rule.

In some embodiments, controlling the cutting deck to be raised by the non-fixed height value comprises:
determining a height value to be raised according to a current height of the cutting deck, and/or according to a difference between the current height and a target height, and controlling the cutting deck to be raised from the current height to a corresponding height according to the height value to be raised.

In some embodiments, the height value to be raised is inversely correlated with the current height; or, the height value to be raised is positively correlated with the difference between the current height and the target height.

The height value to be raised being inversely correlated with the current height means that the lower the current height, the higher the height raised at a single time (the height value to be raised).

The height value to be raised being positively correlated with the difference between the current height and the target height means that the greater the difference between the current height and the target height, the higher the height raised at a single time (the height value to be raised).

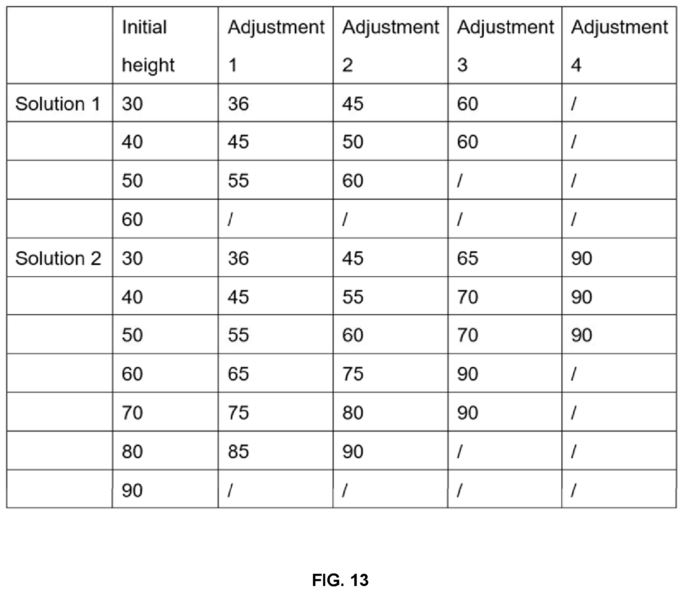

Referring to FIG. 13:
Taking the initial height as the target height set by the user as an example, the positive correlation and the inverse correlation are briefly described below:

Regarding "the greater the difference between the current height and the target height, the higher the height raised at a single time", taking Solution 1 as an example: in the first row of data, the user sets the target height to x (any value in the interval 30-39) mm. When raising of the cutting deck height is triggered, the height is raised upward by 6 mm (36-30=6 mm) to x+6 mm (a value in the interval 36-41). At this time, if raising of the cutting deck height is triggered again, the height is raised upward by 9 mm (45-36=9 mm), and so on, the next adjustment is an upward raising by 15 mm.

In Solution 2, the maximum height is 52 mm; for example, if the current height is 37, the height is raised by 15 mm to reach 52 mm; if the current height is 39, the height is raised by 15 mm, but since the maximum height is 52, the height is only adjusted to the maximum height of 52 mm.

Regarding "the lower the current height, the higher the height raised at a single time", the table shows a trend.

The initial height is the target height set by the user. It can be understood that the cutting deck height will first cut within the working area at the target height, so at the very beginning, the current height is the target height.

Still taking Solution 1 as an example, taking the data in the initial height column and the adjustment 1 column as an example:
Assuming the current height x is any value in the interval 30-39, the height is raised by 6 mm.

Assuming the current height x is any value in the interval 40-50, the height is raised by 5 mm.

Taking the data in the adjustment 1 column and the adjustment 2 column:
When the current height is in the interval 36-45, the height is raised by 9 mm.

When the current height is in the interval 45-55, the height is raised by 5 mm.

Similarly, the above positive correlation and inverse correlation relationships also apply to Solution 2, which will not be described again here.

Considering that the cutting deck of the autonomous mowing device has limited lifting space, in some embodiments, the method further comprises:
judging whether the corresponding height after raising according to the graduated lifting strategy is greater than a maximum height to which the cutting deck can be raised, and when yes, controlling the cutting deck to be raised to the maximum height.

In some embodiments, when not, executing the step of, in response to the load information satisfying the first preset condition, raising the height of the cutting deck relative to the ground; or executing the step of acquiring the load information of the cutting motor.

In some embodiments, the method further comprises:
judging whether the current height of the cutting deck is the maximum height; when yes, judging whether the load information at the maximum height satisfies the second preset condition; when not, indicating that even the maximum height cannot pass through the dense grass area, marking the front of the autonomous device as dense grass or recording a current position of the autonomous device, and re-planning a path; wherein the purpose of marking or recording is to wait for subsequent processing, and the subsequent processing includes, but is not limited to, prompting the user to use a mowing device (such as a hand-held device or a device with a higher rotational speed or torque) having a cutting capacity greater than that of the current intelligent lawn mower to cut the dense grass area.

That is, the cutting deck height is raised according to the graduated lifting strategy until the maximum height is reached, and then it is judged whether the maximum height can pass through the dense grass area; when not, marking or recording is adopted to wait for subsequent processing.

Further, when not, i.e., the corresponding height after raising according to the graduated lifting strategy is not greater than the maximum height to which the cutting deck can be raised, the step of, in response to the load information satisfying the first preset condition, raising the height of the cutting deck relative to the ground is executed; or the step of acquiring the load information of the cutting motor is executed.

In some embodiments, the method further comprises:
judging whether the first path is a re-cutting path; wherein the re-cutting path refers to a path on which the autonomous mowing device has performed mowing operation on at least a portion of the first path at the lowered height of the cutting deck;
when yes, marking the first path and waiting for subsequent processing;
when not, executing the step of controlling the mowing device to perform mowing operation on the first path at the lowered height of the cutting deck.

That is, in order to improve the cutting efficiency of the dense grass area, a re-cutting judgment is usually performed on the first path, i.e., the same path is cut no more than twice (one cutting with the cutting deck raised and one re-cutting with the cutting deck lowered); if after one re-cutting the user's cutting requirement for the dense grass area is still not met, the dense grass path is marked, and/or the current position is recorded, and/or the uncut portion is recorded, and waiting for subsequent processing. The subsequent processing may be waiting until the end (e.g., after completing the local area or the global area) for another re-cutting or reminding the user to manually handle it. Of course, in some embodiments, the subsequent processing may also adopt the above manner, which will not be described in detail here.

In some embodiments, in response to the load information satisfying the second preset condition, lowering the height of the cutting deck relative to the ground comprises:
judging whether a difference between a current height of the cutting deck and a height set by a user satisfies a threshold condition,
when yes, controlling the autonomous mowing device to lower the cutting deck to the height set by the user, and continuing to work;
when not, executing the step of controlling the autonomous mowing device to perform mowing operation on the first path at the lowered height of the cutting deck. For example, controlling the cutting deck to be lowered to the height set by the user, and controlling the autonomous mowing device to perform mowing operation on the first path at the lowered height of the cutting deck.

Considering that the measure of raising the cutting deck requires re-cutting, which may affect the cutting efficiency of the dense grass, before raising the cutting deck, some pre-measures, such as speed reduction, reversing, increasing torque, reversing the cutting deck, etc., may be adopted first to attempt to cope with the overloaded area. For example, in some embodiments, before the step of raising the height of the cutting deck relative to the ground, the method further comprises: taking at least one of the following pre-measures to attempt to pass through the overloaded area;
A: reducing a moving speed of the autonomous mowing device.
   By reducing the speed, resistance is reduced and the load is lowered, so that the rotational speed of the cutting deck is expected to be restored.
B: controlling the autonomous mowing device to reverse by a preset distance or for a preset time.

Therefore, in some embodiments, in response to the load information satisfying the first preset condition, measure A or measure B or a combination of measures A and B may be first adopted as pre-measures before raising the cutting deck, wherein when A and B are combined, A may be performed first and then B, i.e., the speed reduction measure is first adopted, and if the speed reduction cannot cope with the overload, the reversing measure is then adopted; specifically, the moving speed of the mowing device is reduced, and if the overloaded area cannot be coped with, the mowing device is controlled to reverse by the preset distance or for the preset time, and then the action of continuing to move forward is performed; when A and B are combined, B may also be performed first and then A, i.e., the reversing measure is first adopted, and if the reversing cannot cope with the overload, the speed reduction measure is then adopted.

It should be noted that in addition to the above measures A and B, the pre-measures may also include measure C, wherein measure C includes but is not limited to one of the following:
C1. causing the cutting deck to rotate in a reverse direction. This removes entangled grass from the blade, thereby reducing the load.
C2. increasing the rotational torque of the cutting deck. By increasing the rotational torque, it is expected that grass entangled in the blade will be cut off, and the blade rotational speed that was reduced due to overload will be restored.

Considering that the time for increasing the torque cannot be too long, otherwise it may easily cause overheating and shutdown, the time for increasing the torque needs to be limited. In some embodiments, the rotational torque of the cutting deck is increased within a time t0, and t0 may be set according to the overheating handling capability of the autonomous device, for example, t0 is set to within 5 s, such as t0=3 s.

C3. stopping rotation of the cutting deck and causing the autonomous device to rotate in place. This causes the cutting deck to move from a high-resistance position to a lowresistance position, thereby reducing the load, and the rotational speed is expected to be restored.

C4. reducing the vehicle speed to 0. The mowing device remains in place, the height of grass may gradually decrease, so the load is expected to decrease, for example, if the load is represented by the rotational speed, the rotational speed is expected to be restored.

C5. reversing for t2. The lawn mower returns to an area that has already been mowed, where the resistance from grass is reduced, and the load is expected to decrease, for example, the rotational speed is expected to be restored. When the cutting blade interferes with an obstacle, the blade moves away from the obstacle by moving backward, so the rotational speed is expected to be restored.

It can be understood that measure C may be combined with measure A or B to cope with the overload; this is not limited in the present disclosure.

In some embodiments, a combination of measures A, B, and C is used to cope with the load.

Specifically, the combination order of measures A, B, and C is A first, then B, then C, i.e., when the load is high (indicating entering dense grass), the speed is first reduced; if the speed reduction cannot cope, then reversing is performed; if the reversing also cannot cope, then measure C is adopted to reduce the load so that the rotational speed is restored.

It can be understood that after adopting the above measures, cutting of the dense grass is continued. For example, after adopting the reversing measure, the autonomous mowing device is controlled to change to a forward direction to continue working; for another example, after reducing the vehicle speed to 0, the autonomous mowing device is controlled to restore the vehicle speed to the previous state to continue working; for another example, after adopting the measure of stopping rotation of the cutting deck and causing the autonomous device to rotate in place, the cutting deck is controlled to start and continue working.

In some embodiments, when the mowing device adopts the pre-measure B, the method further comprises:
after reversing by the preset distance or for the preset time, controlling the autonomous device to continue moving forward;
judging whether a forward distance is greater than a reversed distance;
when not, executing the step of raising the height of the cutting deck relative to the ground.

In other words, after the reversing measure is adopted in the pre-measures, the autonomous device is caused to change to the previous forward state to continue cutting the dense grass area; and during the forward movement, it is judged whether the dense grass can be cut; whether the dense grass can be cut may be determined by: judging whether the forward distance is greater than the reversed distance; if the forward distance is greater than the reversed distance, it indicates that the dense grass can be cut, proving that the reversing measure is effective in coping with the dense grass; if the forward distance is not greater than the reversed distance, it indicates that the dense grass cannot be cut, and at this time, the measure of raising the cutting deck is performed to cope with the dense grass.

Further, after adopting measure A or B or the measure of raising the height of the cutting deck relative to the ground, the method further comprises:
waiting for a set response time of the measure.

That is, after a measure is adopted, there is a certain response time. During this response time, the rotational speed of the cutting deck is expected to be restored, and after waiting for the response time of the measure, the mowing operation is continued.

The response time should not be set too long, otherwise the grass will be worn severely, which also affects the cutting efficiency; the response time should also not be set too short, otherwise the rotational speed cannot rise. Considering the time for preventing grass wear and the time for the rotational speed to rise, in some embodiments, the response time is set to within 5 s; further, the response time is set to within 3 s; still further, the response time is set to 2 s.

It can be understood that after adopting the measure of raising the cutting deck and the pre-measures A, B, or C before raising the cutting deck, the response time of the measure may be reserved to wait for the effect of the measure (e.g., whether the rotational speed can successfully rise).

Considering that if the cutting deck rotates or the machine moves during the raising process of the cutting deck, there is still resistance, which affects the restoration of the rotational speed, in order to reduce the resistance, before raising the cutting deck, the cutting deck may be controlled to stop rotating or the autonomous mowing device may be controlled to stop moving, so as to reduce the influence of resistance. For example, in some embodiments, before raising the height of the cutting deck relative to the ground, the method further comprises:
controlling the cutting deck to stop working and controlling the mowing device to stop moving.

That is, the cutting deck is controlled to be raised while the cutting deck is stopped and the machine is stopped.

It can be understood that, on the premise that the cutting deck stops working, after the cutting deck is controlled to be raised, the cutting deck needs to be started again to continue working; similarly, on the premise that the autonomous mowing device stops moving, after the cutting deck is controlled to be raised, the autonomous device needs to be controlled to continue moving forward to perform the cutting work.

Regarding how to reduce the moving speed, in some embodiments, reducing the moving speed of the mowing device comprises:
reducing the moving speed of the mowing device step by step according to a preset gradient speed reduction rule until the moving speed of the mowing device is reduced to a lowest speed.

That is, a strategy of step-by-step speed reduction is adopted to cope with the dense grass area.

The gradient speed reduction rule comprises a fixed speed value speed reduction rule and a non-fixed speed value speed reduction rule; the fixed speed value speed reduction rule means that the speed reduced each time is fixed; the non-fixed speed value speed reduction rule means that the speed reduced each time is not fixed.

In some embodiments, the gradient speed reduction rule adopts the non-fixed speed value speed reduction rule, for example, the gradient speed reduction rule dynamically adjusts the speed according to a PID control logic.

The PID control logic is as follows: $PID Output = 1.0 - \left(\left(SetRpm-offset-RealRpm\right)/\left(SetRpm-offset\right)\right) Kp .$

In the formula, PID Output represents an output, SetRpm represents a set value of a rotational speed of a drive wheel motor, RealRpm represents an actual value of the rotational speed of the drive wheel motor; offset represents a deviation, which refers to a steady-state error of the control system, i.e., a difference between a setpoint and an actual output value after the system reaches a steady state; Kp represents a proportional gain.

It is judged whether the output (PID Output) is less than or equal to 0; when yes, the rotational speed of the drive wheel is reduced to a lowest rotational speed, and the lowest rotational speed may be represented by a numerical value or by a percentage of the maximum rotational speed, for example, the lowest rotational speed is 10% of the maximum rotational speed.

If the output is greater than 0, it is judged whether a previous output (last PID Output) is greater than a current output (PID Output); if the previous output is greater than the current output, the rotational speed of the drive wheel is set to (PID Output MaxRpm)/100; wherein MaxRpm is a maximum rotational speed of the drive wheel; if the previous output is not greater than the current output, the rotational speed of the drive wheel is set to (PID Output MaxRpm)/100--; wherein -- represents a slow speed increase.

In some embodiments, the moving speed of the mowing device may also be reduced according to a preset speed reduction rule; specifically, the reduced moving speed may be achieved by the following method:
determining a target wheel rotational speed after speed reduction according to a wheel rotational speed of the mowing device and a speed reduction coefficient; and controlling the wheel rotational speed of the mowing device to be reduced to the target wheel rotational speed based on a set speed reduction slope.

The speed reduction coefficient may be determined based on a set deceleration percentage of the wheel rotational speed, an output torque, and a set threshold of the torque, and specifically may be obtained by the following method: determining a first difference between the output torque and the set threshold of the torque; determining a second difference between a maximum output torque of the cutting motor and the set threshold of the torque; obtaining a ratio between the first difference and the second difference; calculating a product of the ratio and the set deceleration percentage, and determining the product as the speed reduction coefficient of the wheel rotational speed.

For ease of understanding, the specific implementation process of reducing the wheel rotational speed of the intelligent lawn mower in the above embodiment is further described below through a specific embodiment. In this embodiment, assuming that a maximum output torque of a mowing motor (cutting motor) is T, the set threshold of the torque is 90% of T, and the set deceleration percentage of the wheel rotational speed is 75%. If it is detected that the output torque of the mowing motor is 95% of T, then the output torque of the mowing motor reaches the set threshold of the torque. Therefore, parameters are substituted, and the speed reduction coefficient A of the wheel rotational speed is calculated by the following formula: $A = \left(95%\times T-90%\times T\right) / \left(T-90%\times T\right) \times 75 %$

Through calculation, the speed reduction coefficient A of the wheel rotational speed is 37.5%, which means that in this case, the wheel rotational speed needs to be reduced by 37.5%.

If the wheel rotational speed of the intelligent lawn mower (autonomous mowing device) during normal operation is 33 rpm, then based on the speed reduction coefficient of 37.5% obtained above, the wheel rotational speed D that the intelligent lawn mower needs to reduce can be calculated, and D=33×37.5%. Then the target wheel rotational speed V of the intelligent lawn mower after speed reduction is V=33-D. The wheel rotational speed of the intelligent lawn mower is then controlled to be reduced to the target wheel rotational speed. During the speed reduction process, in order to improve the stability of the intelligent lawn mower, the speed reduction process of the intelligent lawn mower may be controlled based on the speed reduction slope.

It should be noted that, in some embodiments, the non-fixed value speed reduction rule may also refer to the non-fixed value raising rule described above, for example, determining the speed to be reduced according to the current rotational speed; for the sake of brevity, this will not be described again here.

In some embodiments, the method further comprises:
in response to the load information satisfying a third preset condition, controlling the mowing device to reduce the moving speed.

In some embodiments, the method further comprises:
in response to the load information satisfying a fourth preset condition, reversing by a set distance d, and then moving forward.

In some embodiments, the method further comprises:
in response to the load information satisfying a fifth preset condition, moving forward normally.

The third preset condition, the fourth preset condition, and the fifth preset condition are conditions different from the first preset condition. For example, the third preset condition is N (load) greater than N0 and less than N1; the fourth preset condition is N greater than N1 and less than N2; the first preset condition is N greater than N2. The fifth preset condition is N less than N0. The second preset condition may be set to be the same as the fifth preset condition, i.e., the load when passing through the dense grass area is consistent with the load during normal operation (light load). For ease of understanding, the load N is represented by the rotational speed of the cutting deck as an example; the first preset condition may be that the current rotational speed of the cutting deck is 55% or less of the no-load rotational speed; the third preset condition may be that the current rotational speed of the cutting deck is between 60% and 90% of the no-load rotational speed; the fourth preset condition may be that the current rotational speed of the cutting deck is greater than 55% of the no-load rotational speed but less than 60%; the second preset condition and the fifth preset condition may be that the current rotational speed of the cutting deck is above 90% of the no-load rotational speed.

It can be understood that when the third preset condition and the fourth preset condition are the same as the first preset condition, speed reduction, reversing, and raising the cutting deck are all measures for coping with the dense grass area.

In some embodiments, controlling the mowing device to reduce the moving speed comprises: controlling the autonomous mowing device to reduce the moving speed according to a preset relationship between a moving speed of the autonomous mowing device and a load.

That is, considering the influence of pulling (grass is partially cut off, leaving a strand uncut), the speed of the drive wheel is adjusted according to the rotational speed of the cutting deck.

The autonomous device may store or acquire the preset relationship between the moving speed and the load, and then determine the corresponding moving speed according to the preset relationship.

Further dividing the load of the third preset condition and determining the corresponding speed; for ease of understanding, the load of the third preset condition is divided into three levels, still taking the rotational speed of the cutting deck as an example of representing the load, wherein the preset relationship may be:
when the ratio of the rotational speed of the cutting deck to the no-load rotational speed is in the interval (80%, 90%], the moving speed is reduced to 75% of the normal speed; when the ratio of the rotational speed of the cutting deck to the no-load rotational speed is in the interval (70%, 80%], the moving speed is reduced to 50% of the normal speed; when the ratio of the rotational speed of the cutting deck to the no-load rotational speed is in the interval (60%, 70%], the moving speed is reduced to the lowest speed. Considering the walking appearance and the motor control capability, the lowest speed may be set to 30%, 20%, or 10% of the normal speed.

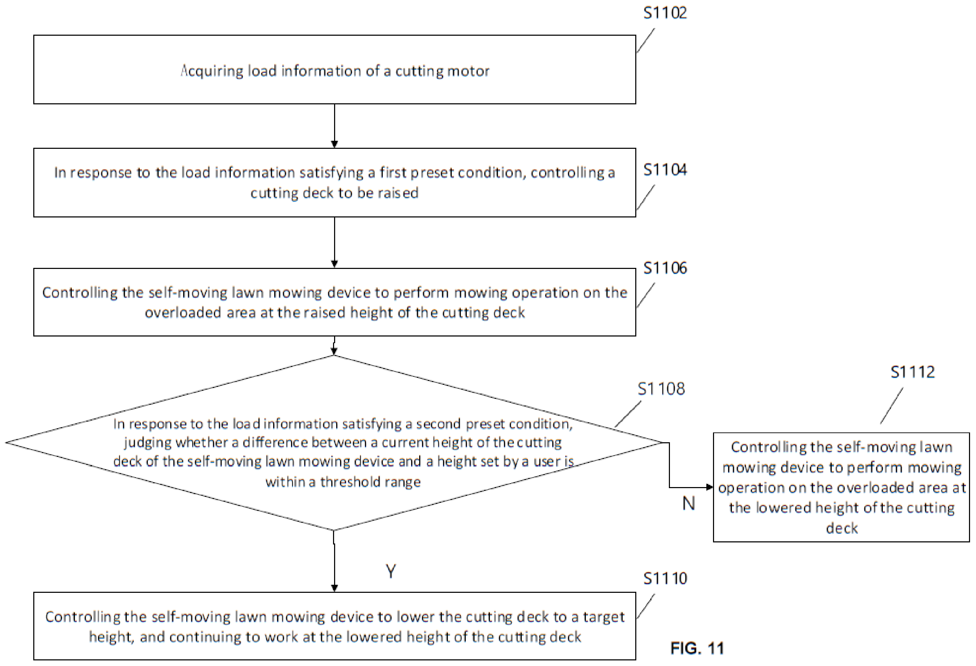

As shown in FIG. 11, the present disclosure further provides a control method for an autonomous mowing device, wherein the method comprises:
step S1102: load information of a cutting motor is acquired;
step S1104: in response to the load information satisfying a first preset condition, a cutting deck is controlled to be raised;
wherein the first preset condition is indicating that the autonomous mowing device enters an overloaded area;
step S1106: the autonomous mowing device is controlled to perform mowing operation on the overloaded area at the raised height of the cutting deck;
step S1108: in response to the load information satisfying a second preset condition, it is judged whether a difference between a current height of the cutting deck of the autonomous mowing device and a height set by a user is within a threshold range;
wherein the second preset condition is indicating that the autonomous mowing device passes through the overloaded area by means of raising the cutting deck;
when yes, step S1110 is executed;
step S1110: the autonomous mowing device is controlled to lower the cutting deck to a target height, and to continue working at the lowered height of the cutting deck.

Continuing to work means continuing to perform mowing operation on the working area according to an initial strategy, for example, continuing to work according to a pre-planned path. Taking the pre-planned path as a raster cutting path for cutting the working area as an example: the mowing device cuts along a current boustrophedon path; in response to the load information satisfying the first preset condition, the cutting deck is controlled to be raised; the autonomous mowing device is controlled to perform mowing operation on the overloaded area at the raised height of the cutting deck; in response to the load information satisfying the second preset condition, different settings of the second preset condition are respectively described as follows:

When the second preset condition is set to that the autonomous mowing device has just passed through the dense grass area (e.g., the time point when the load undergoes a sudden change, i.e., the load is less than the first preset load as described above), the autonomous mowing device continues to work along the current boustrophedon path.

When the second preset condition is set to that the autonomous mowing device reliably passes through the dense grass area e.g., the load is less than the first preset and the duration of continuous operation during which the load is less than the first preset load satisfies a preset time, a preset distance, and/or a preset time), the autonomous mowing device still continues to work along the current boustrophedon path; it should be noted that this strategy is applicable when the path where the dense grass area is located is shorter than the length of the boustrophedon path, or the dense grass area does not extend to the boundary of the working area; continuing to work means starting the next boustrophedon path.

When the second preset condition is set to that the autonomous mowing device moves to an end point of a target path, taking the target path as the current boustrophedon path as an example, continuing to work means turning and starting the next boustrophedon path to continue working; similarly, when the target path is the last boustrophedon path of a local area, continuing to work means starting cutting work in another area (an area different from the local area), for example, turning and moving to a start point of a planned path of another area to work; it can be understood that when the target path is the last boustrophedon path of the global area (the entire working area), continuing to work means that if there is a new working area (different from the current working area) that needs to be cut, continuing cutting of the new working area; for example, if the cutting of the new working area has a new planned path, moving to a start point of the new working area to work; if there is no new working area that needs to be cut, continuing to work may be understood as standby waiting to continue working, for example, returning to a charging station to wait.

When not, step S1112 is executed; step S1112: the autonomous mowing device is controlled to perform mowing operation on the overloaded area at the lowered height of the cutting deck.

The difference between this embodiment and the above embodiment is only that, considering that the difference between the cutting height for coping with the dense grass by raising the cutting deck and the height set by the user is within an error range, for example, the cutting effect reaches a level that is visually indistinguishable, the user's cutting requirement is also satisfied; in this case, there is no need to perform the re-cutting strategy, and the cutting deck may be lowered to the height set by the user, and the autonomous mowing device may continue to work at the lowered height of the cutting deck.

It can be understood that for parts not described in this embodiment, such as the manner of raising the cutting deck (e.g., step-by-step raising), the pre-measures that may be adopted (e.g., speed reduction, reversing, etc.), the manner of speed reduction (e.g., step-by-step reduction, speed reduction according to a corresponding relationship), reserving a certain response time after adopting a measure, and the re-cutting judgment when re-cutting is required, reference may be made to the foregoing description, and for the sake of brevity, these will not be described again here.

It should be noted that, in other embodiments, considering that the difference between the cutting height for coping with the dense grass by raising the cutting deck and the height set by the user is within an error range, for example, the cutting effect reaches a level that is visually indistinguishable, the user's cutting requirement is also satisfied; in this case, there is no need to perform the re-cutting strategy, and since the difference between the current height and the height set by the user is within the threshold range, the cutting deck may also not be lowered, and the autonomous mowing device may directly continue to work.

Based on the same inventive concept as the foregoing embodiments, the foregoing embodiments are described in detail below through an example, and in this example, the autonomous mowing device is an automatic lawn mower.

The operation control method provided in this example mainly includes the following three processes:

### (I) Dense grass perception

The automatic lawn mower performs full-coverage work within the working area using a boustrophedon path, and detects operating parameters of the automatic lawn mower, such as the rotational speed of the cutting deck and the torque of the cutting motor, in real time as detection conditions for triggering dense grass. When it is detected that a load represented by operating parameter values (also referred to as dense grass detection values) satisfies a first preset condition (e.g., the torque is greater than a first torque threshold, and/or the rotational speed is less than a first rotational speed threshold), a dense grass cutting stage is triggered; the dense grass cutting stage includes the measure of raising the cutting deck. During the dense grass cutting stage, if it is detected that the load represented by the operating parameter values satisfies a second preset condition (e.g., the torque is less than a second torque threshold, and the rotational speed is greater than a second rotational speed threshold), a dense grass re-cutting stage is triggered.

### (II) Dense grass cutting

In addition to the measure of raising the cutting deck, the dense grass cutting stage may also adopt some pre-measures, such as speed reduction and reversing; wherein the speed reduction may adopt a step-by-step speed reduction manner, and the raising of the cutting deck may adopt a step-by-step cutting deck raising manner. A certain response time is reserved after a measure is adopted in the dense grass cutting stage.

### (III) Dense grass re-cutting

Since the cutting deck is raised, after passing through the dense grass area with the raised cutting deck, if the difference between the raised cutting deck height and an expected height (e.g., the height set by the user) is large, the dense grass needs to be cut to the expected height, wherein the re-cutting manners include: immediate re-cutting, re-cutting after completing the current path, re-cutting after completing a local area, re-cutting after completing the entire area, etc.

It can be understood that after passing through the dense grass area with the raised cutting deck, if the difference between the raised cutting deck height and the expected height (e.g., the height set by the user) is not large, the user's cutting requirement is deemed to be satisfied by default, and in this case, re-cutting is not required, and the autonomous mowing device may continue to work.

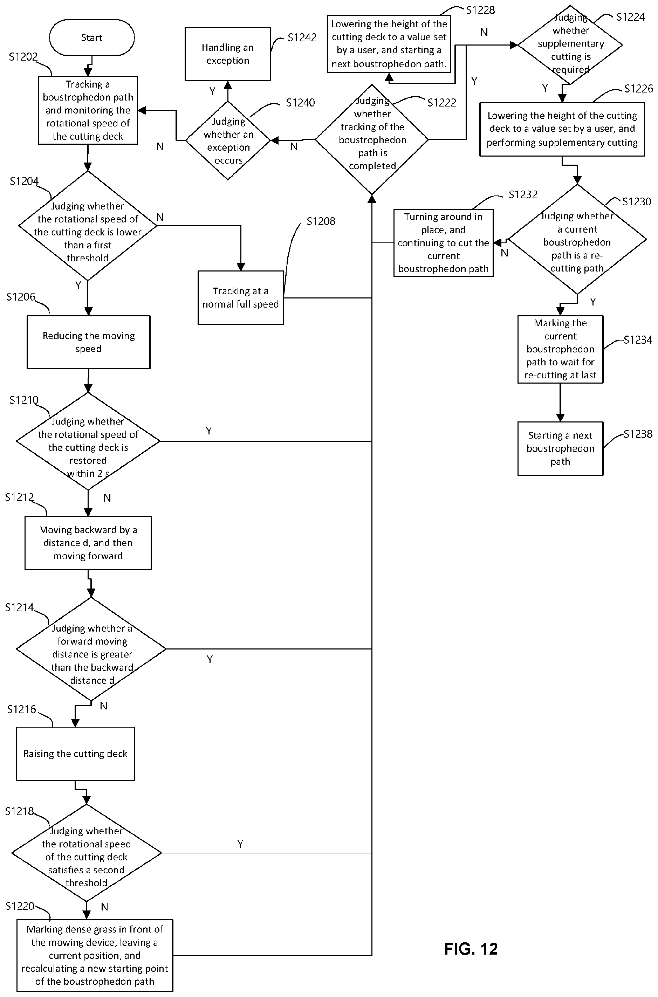

Referring to FIG. 12, which is a specific process schematic diagram of the control method for a autonomous device provided in this embodiment, comprising the following steps:
step S1202: raster tracking is performed and the rotational speed of the cutting deck is monitored;
step S1204: it is judged whether the rotational speed of the cutting deck is less than a first threshold;
the first threshold may be set to, for example, 90% of the no-load rotational speed or the normal working rotational speed.

The purpose of step S1204 is to judge whether an overload occurs, so as to adopt measures for coping with the dense grass to deal with the overload.

When yes, step S1206 is executed: the vehicle speed is reduced; when not, step S1208 is executed: tracking is performed at a normal speed.

The purpose of reducing the vehicle speed is to reduce resistance and restore the rotational speed of the cutting deck; considering that restoring the rotational speed of the cutting deck requires a certain amount of time and for the purpose of preventing grass wear, after the vehicle speed is reduced to a target vehicle speed, a period of time (continuous 2 s) is given.

It should be noted that the manner of reducing the vehicle speed may refer to the foregoing description, for example, a PID control system is used to dynamically control the vehicle speed until the vehicle speed is reduced to a lowest vehicle speed to cope with the overload.
step S1210: it is judged whether the rotational speed of the cutting deck is restored within 2 s.

When yes, it indicates that the speed reduction measure can cope with the overload condition, and raster tracking is continued to judge whether the raster tracking is completed, i.e., whether the autonomous mowing device can move to the end point of the current boustrophedon path.

When not, it indicates that the speed reduction measure (reduction to the lowest vehicle speed) cannot cope with the overload condition, and the reversing measure is adopted to cope with the overload.

step S1212: the autonomous mowing device reverses by a distance d, and then moves forward.

The reversing distance should not be set too large, otherwise it does not comply with safety regulations. Here, the reversing distance is preferably a cut distance, so as to reduce resistance and restore the rotational speed of the cutting deck, and then continue to move forward; in some embodiments, the reversing distance is set to 20 cm.

step S1214: it is judged whether the forward distance is greater than the reversed distance d.

The purpose of step S1214 is to judge whether the dense grass can be cut after the reversing measure; whether it can be cut may also be determined by comparing the position of the machine after the last reversing with the current position, which will not be described again here.

When yes, raster tracking is continued to judge whether the raster tracking is completed.

When not, it indicates that the reversing measure cannot cope with the overload; at this time, the measure of raising the cutting deck may be adopted to reduce resistance and restore the rotational speed of the cutting deck.
step S1216: the cutting deck is raised. The result of raising the cutting deck is verified in step S1218.

The cutting deck is raised in a step-by-step manner, for example, according to the current height, or the relationship between the current height and the height set by the user, the corresponding height is raised, until it is determined whether raising to the maximum height of the cutting deck can cope with the overload.

Here, the cutting deck height may be raised while the machine and the cutting deck are stopped, and the cutting deck is restarted after raising.
step S1218: it is judged whether the rotational speed of the cutting deck satisfies a second threshold.

The second threshold is set to a value at which the rotational speed of the cutting deck undergoes a sudden change, for example, set to a value close to the no-load rotational speed or the normal working rotational speed; the proximity may be characterized by a percentage, for example, the second threshold is set to 90% of the no-load rotational speed or the normal working rotational speed.

When yes, tracking is continued.

When not, it indicates that the measure of raising the cutting deck (raising to the maximum height) cannot cope with the overload condition, and step S1220 is executed: marking the front of the machine as dense grass, moving away from the current position, and recalculating a new raster start point. That is, marking is adopted, and the path is re-planned to continue working.
step S1222: it is judged whether the raster tracking is completed.

When yes, step S1224 is executed: it is judged whether re-cutting is required. When not, step S1240 is executed: it is judged whether there is an abnormality.

One manner of judging whether re-cutting is required is whether the difference between the current cutting deck height and the height set by the user is within an error range, and the error is set to, for example, 6 mm.

When not, step S1228 is executed: the cutting deck height is lowered to the value set by the user, and the next raster is started; when yes, step S1226 is executed: the cutting deck height is lowered to the value set by the user, and re-cutting is performed.

It should be noted that, before lowering the cutting deck height to the value set by the user, the machine is controlled to stop, i.e., the cutting deck is lowered while the machine is stopped.

Since the boustrophedon path is completed, the autonomous mowing device turns by 180 degrees (turns in place) to continue cutting the current raster; to improve efficiency, this is repeated only once. Therefore, during re-cutting, step S1230 needs to be executed: it is judged whether the current raster has been re-cut.

When yes, step S1234 is executed: the current raster is marked and waiting for another re-cutting at the end; step S1238 is executed: the next raster is started to continue working.

When not, step S1232 is executed: the autonomous mowing device turns in place and continues cutting the current raster.

It should be noted that, when judging whether the raster tracking is completed, if the raster tracking is not completed, it may be caused by an abnormality; therefore, the judgment of step S1240 needs to be executed. If there is an abnormality, the abnormality is handled, for example, the abnormality is collision, stalling, slipping, low battery, dragging, etc.; then the cutting deck is lowered to the height set by the user, and a new raster is generated for cutting.

As shown in FIG. 1, an autonomous mowing device 1 in an embodiment of the present disclosure can move autonomously within a working area 2 to automatically perform a mowing operation task. Referring to FIG. 2, the autonomous mowing device 1 may include a controller 10, a sensor 11, a cutting assembly (e.g., a cutting deck 12), a height adjustment mechanism 13, a drive motor 14, a traveling device 15, and a power supply device 16, wherein the sensor 11 is in signal connection with the cutting deck 12 and the drive motor 14, and is configured to detect loads such as a rotational speed of the cutting deck 12 and a torque of the drive motor 14; the controller 10 is in signal connection with the sensor 11 and the height adjustment mechanism 13, and is configured to receive load data detected by the sensor 11 and to trigger the height adjustment mechanism 13 to adjust a height of the cutting deck 12 relative to the ground; the height adjustment mechanism 13 is in signal connection with the cutting deck 12, and is configured to raise or lower the height of the cutting deck 12 relative to the ground; the drive motor 14 is in signal connection with the cutting deck 12 and the traveling device 15, and is configured to provide power for rotation of the cutting deck 12 and movement of the traveling device 15; the power supply device 16 is configured to provide energy required for operation of the controller 10, the sensor 11, the cutting deck 12, the height adjustment mechanism 13, the drive motor 14, and the traveling device 15. It can be understood that a dense grass area may exist within the working area 2, wherein the dense grass area refers to a working area in which a load of the autonomous mowing device exceeds a preset load threshold due to a density of grass reaching a certain degree and/or a height of grass reaching a certain height. If mowing operation is performed on the dense grass area according to a normal working mode, when the height of grass is higher than a cutting height of the cutting deck set by the user by a certain height and/or the density of grass reaches a certain degree, a cutting load of the autonomous mowing device may exceed a preset load threshold, i.e., an overload phenomenon occurs. To address the above problem, an existing technical solution is: detecting the rotational speed and torque of the cutting deck in real time, and when a threshold is reached, marking an area in front of the autonomous mowing device as a dense grass area, abandoning cutting, and re-planning a cutting path. For example, with continued reference to FIG. 1, when the autonomous mowing device 1 works to a dense grass area 3, cutting of the dense grass area 3 is abandoned.

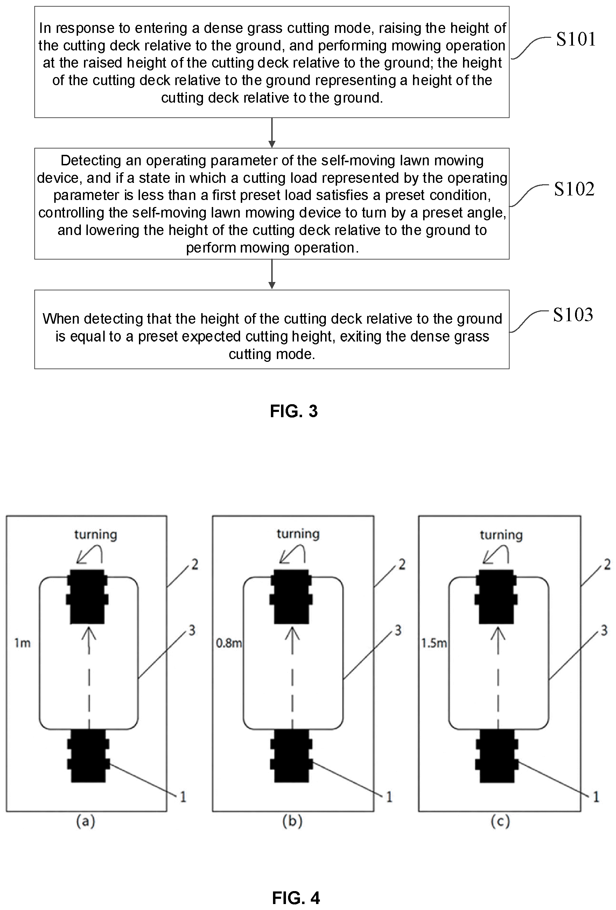

Therefore, there is a problem in the prior art that needs to be solved regarding how to cut the dense grass area, so as to improve coverage rate of treatment for the dense grass area. Based on this, as shown in FIG. 3, the present application proposes an operation control method. It should be noted that although the present disclosure provides method operation steps as in the following embodiments or as shown in the accompanying drawings, for steps that are not logically causally necessary, the execution order of these steps is not limited to the execution order provided in the embodiments of the present disclosure.

Referring to FIG. 3, which is an operation control method according to an embodiment of the present application, the method may be performed by an operation control apparatus, which may be implemented in software and/or hardware. In this embodiment, the execution subject of the method is an autonomous mowing device, and the autonomous mowing device includes a cutting deck with an adjustable height relative to the ground as an example. The method provided by this embodiment includes:
step S101: in response to entering a dense grass cutting mode, a height of a cutting deck relative to the ground is raised, and mowing operation is performed at the raised height of the cutting deck relative to the ground; the height of the cutting deck relative to the ground represents a height of the cutting deck relative to the ground.

Specifically, the controller of the autonomous mowing device, in response to entering the dense grass cutting mode, triggers the height adjustment mechanism to raise the height of the cutting deck relative to the ground, controls the cutting deck to perform mowing operation at the raised height relative to the ground, and lowers the height of the cutting deck relative to the ground to a preset expected cutting height to perform mowing operation.

In one implementation, the expected cutting height may be a height value set by the user (referred to as a user set value) to meet the user's cutting requirement.

Considering factors such as inevitable vibration of the autonomous mowing device during cutting, the cutting deck may be configured for passive raising (also referred to as floating) to improve passability, and the visual recognition capability of the human eye, there may be an error in the height. In one implementation, the expected cutting height may take the error into account, for example, the expected cutting height may be the sum of the height value set by the user and a preset error. At this time, when the difference between the height of the cutting deck relative to the ground and the height value set by the user is within the preset error, the user's cutting requirement may also be considered satisfied. The preset error may be determined based on at least one of the above factors; for example, the preset error is determined based on the factor with the greatest influence, such as the largest error among the errors generated by the above factors; for another example, the preset error is determined based on one or several main factors, which is not limited. In one implementation, the preset error takes the visual recognition capability of the human eye as the main consideration factor, for example, the preset error is set to 6 mm.

The triggering condition for the dense grass cutting mode may be set according to operating parameter information corresponding to historical mowing operations performed by the autonomous mowing device on the dense grass area, so that the autonomous mowing device is triggered to enter the dense grass cutting mode when the triggering condition is satisfied.

In one embodiment, the triggering condition for the dense grass cutting mode may also be a preset operating parameter condition, such as the rotational speed being less than a first preset rotational speed threshold, and/or the torque being greater than a preset torque, etc.

In one embodiment, the preset torque may be a preset torque or a preset torque interval. When the preset torque is a preset torque interval, the torque being greater than the preset torque may be understood as the torque being greater than any value in the torque interval. Any value in the preset torque interval represents a torque of the autonomous mowing device during normal operation. The torque of the autonomous mowing device during normal operation may be a torque when the cutting deck is idling (the height of the cutting deck relative to the ground is higher than the height of grass). In one embodiment, the torque of the autonomous mowing device during normal operation may be a torque when the height of the cutting deck relative to the ground is the same as the height of grass and the autonomous mowing device is cutting grass. In one embodiment, the torque of the autonomous mowing device during normal operation may be a torque when the height of the cutting deck relative to the ground and the height of grass satisfy a preset height difference condition and the autonomous mowing device is cutting grass.

The dense grass cutting mode is used to represent a working mode in which the autonomous mowing device first raises the cutting deck to cut the dense grass area and then lowers the cutting deck to cut the dense grass area, wherein the cutting deck may be raised in a step-by-step manner to achieve layered cutting of the dense grass area; or the cutting deck may be raised to a preset height (such as the maximum height to which the cutting deck can be raised) to avoid the need to adjust the height of the cutting deck relative to the ground multiple times, thereby improving the working efficiency of the autonomous mowing device and facilitating rapid passage through the dense grass area; similarly, the cutting deck may be lowered to the expected cutting height (such as the height value set by the user) to meet the user's cutting requirement for the dense grass area; or the cutting deck may be lowered in a step-by-step manner to achieve layered cutting of the dense grass area, gradually approaching the user's cutting requirement for the dense grass.

Therefore, in one implementation, the dense grass cutting mode is used to represent a working mode in which the autonomous mowing device first raises the cutting deck to cut the dense grass area, and then gradually lowers the cutting deck in a step-by-step manner for layered cutting. It can be understood that since the density at a corresponding height is generally lower when the height of grass is higher, after determining to enter the dense grass cutting mode, the autonomous mowing device can raise the height of the cutting deck relative to the ground and perform mowing operation at the raised height of the cutting deck relative to the ground, so as to reduce the amount of grass cut each time, thereby reducing the cutting load.

In one implementation, the dense grass cutting mode is used to represent a working mode in which the autonomous mowing device first gradually raises the cutting deck in a step-by-step manner for layered cutting to pass through the dense grass area, and then lowers the cutting deck to the height value set by the user for cutting. It can be understood that since the density at a corresponding height is generally lower when the height of grass is higher, after determining to enter the dense grass cutting mode, the autonomous mowing device can gradually raise the height of the cutting deck relative to the ground in a step-by-step manner and perform mowing operation at the raised height of the cutting deck relative to the ground, so as to reduce the amount of grass cut each time, thereby reducing the cutting load and smoothly passing through the dense grass area.

In one implementation, the dense grass cutting mode is used to represent a working mode in which the autonomous mowing device first gradually raises the cutting deck in a step-by-step manner for layered cutting, and then gradually lowers the cutting deck in a step-by-step manner for layered cutting.

In one implementation, the dense grass cutting mode is used to represent a working mode in which the autonomous mowing device first raises the cutting deck to a preset height (such as the maximum height) for cutting, and then lowers the cutting deck to the expected cutting height (such as the height value set by the user) for cutting. In one implementation, raising the height of the cutting deck relative to the ground and performing mowing operation at the raised height of the cutting deck relative to the ground comprises:
raising the height of the cutting deck relative to the ground to a preset height, and performing mowing operation at a cutting height of the preset height.

Specifically, the controller may trigger the height adjustment mechanism to raise the height of the cutting deck relative to the ground to the preset height, and then control the cutting deck to perform mowing operation at the cutting height of the preset height.

When it is necessary to raise the height of the cutting deck relative to the ground upon entering the dense grass cutting mode, the height of the cutting deck relative to the ground may be directly raised to the preset height, and mowing operation is performed at the cutting height of the preset height, so as to avoid the need to adjust the height of the cutting deck relative to the ground multiple times, thereby improving the working efficiency of the autonomous mowing device. The preset height may be a preset fixed value. In one implementation, the preset height represents the maximum height to which the cutting deck can be raised.

In addition, the preset height may also be set based on the height of grass. In one implementation, before raising the height of the cutting deck relative to the ground to the preset height, the method further comprises: acquiring a height of grass to be cut; and determining the preset height according to the height of the grass to be cut. The height of the grass to be cut may be acquired based on technologies such as image processing and LiDAR. In one implementation, acquiring the height of grass to be cut comprises: acquiring an image of the grass to be cut captured by an image acquisition device; and analyzing the image to determine the height of the grass to be cut. The autonomous mowing device may be provided with an image acquisition device such as a camera, and after entering the dense grass cutting mode, the image acquisition device may be triggered to capture an image of the grass to be cut to obtain a corresponding image, and then the height of the grass to be cut is determined by analyzing the image, so as to achieve rapid and accurate acquisition of the height of the grass to be cut.

In one embodiment, raising the height of the cutting deck relative to the ground and performing mowing operation at the raised height of the cutting deck relative to the ground comprises:
raising the height of the cutting deck relative to the ground by a preset height value, and performing mowing operation at the raised height relative to the ground.

Specifically, the controller may trigger the height adjustment mechanism to raise the height of the cutting deck relative to the ground by the preset height value, and then control the cutting deck to perform mowing operation at the raised height relative to the ground. The preset height value may be a preset fixed value, for example, 5 mm, etc.

In one implementation, determining the preset height according to the height of the grass to be cut comprises:
determining, according to different adjustable heights of the cutting deck relative to the ground, a target height relative to the ground that matches the height of the grass to be cut; the target height relative to the ground being less than the height of the grass to be cut and an absolute value of a difference between the target height relative to the ground and the height of the grass to be cut being greater than a preset first height threshold and less than or equal to a preset second height threshold;
determining the target height relative to the ground as the preset height.

It can be understood that the difference between adjacent adjustable heights of the cutting deck relative to the ground is generally a fixed value, such as 0.5 cm, 2 cm, etc. In order to ensure that when the height of the cutting deck relative to the ground is raised to the preset height and mowing operation is performed at the cutting height of the preset height, grass can be effectively cut, from the different adjustable heights of the cutting deck relative to the ground, a target height relative to the ground that is less than the height of the grass to be cut and for which the absolute value of the difference from the height of the grass to be cut is greater than the preset first height threshold and less than or equal to the preset second height threshold may be selected as the preset height. The preset first height threshold and the preset second height threshold may be set according to the difference between adjacent adjustable heights of the cutting deck relative to the ground, for example, when the difference between adjacent adjustable heights of the cutting deck relative to the ground is a, the preset first height threshold may be set to a, and the preset second height threshold may be set to 2a. For example, assuming that the adjustable heights of the cutting deck relative to the ground include 45 mm, 50 mm, 55 mm, and 60 mm, the preset first height threshold is 5 mm, and the preset second height threshold is 10 mm; if the height of the grass to be cut is 56 mm, the height of the cutting deck relative to the ground of 50 mm may be determined as the preset height. In this way, based on the different adjustable heights of the cutting deck relative to the ground and the height of the grass to be cut, the preset height to which the height of the cutting deck relative to the ground needs to be raised is determined, which can ensure that grass can be effectively cut when mowing operation is performed at the raised height of the cutting deck relative to the ground, thereby improving the working efficiency of the autonomous mowing device.

Step S102: an operating parameter of the autonomous mowing device is detected, and if a state in which a cutting load represented by the operating parameter is less than a first preset load satisfies a preset condition, the autonomous mowing device is controlled to turn by a preset angle, and the height of the cutting deck relative to the ground is lowered to perform mowing operation.

Specifically, the controller detects the operating parameter of the autonomous mowing device in real time, irregularly, or periodically through the sensor, and judges whether the cutting load represented by the operating parameter is less than the first preset load; if it is detected that the cutting load represented by the operating parameter is less than the first preset load, it further judges whether the state in which the cutting load represented by the operating parameter is less than the first preset load satisfies the preset condition, so as to control the traveling device to turn by the preset angle, i.e., control the autonomous mowing device to turn by the preset angle, when the state in which the cutting load represented by the operating parameter is less than the first preset load satisfies the preset condition, and after the autonomous mowing device turns by the preset angle, lower the height of the cutting deck relative to the ground to perform mowing operation, so as to perform layered cutting of grass.

It should be noted that the operating parameter of the autonomous mowing device may be understood as an operating parameter corresponding to the cutting deck of the autonomous mowing device. The operating parameter includes at least one of rotational speed and torque. The preset condition may be set according to actual needs. In one embodiment, the state in which the cutting load represented by the operating parameter is less than the first preset load satisfying the preset condition may be that a duration of the state in which the cutting load represented by the operating parameter is less than the first preset load is greater than or equal to a preset duration.

In one embodiment, the state in which the cutting load represented by the operating parameter is less than the first preset load satisfying the preset condition may be that the duration of the state in which the cutting load represented by the operating parameter is less than the first preset load is greater than or equal to the preset duration, and a traveled distance of the autonomous mowing device in the corresponding state is greater than or equal to a preset distance threshold.

In one embodiment, the state in which the cutting load represented by the operating parameter is less than the first preset load satisfying the preset condition may be that, in the state in which the cutting load represented by the operating parameter is less than the first preset load, the traveled distance of the autonomous mowing device is greater than or equal to the preset distance threshold.

The preset duration and the preset distance threshold may be set according to actual needs, for example, the preset duration may be set to 3 seconds, etc., and the preset distance threshold may be set to 0.5 meters, etc.

If the state in which the cutting load represented by the operating parameter is less than the first preset load satisfies the preset condition, it indicates that the autonomous mowing device may have traveled out of the dense grass area; therefore, at this time, the autonomous mowing device may be controlled to turn by the preset angle and lower the height of the cutting deck relative to the ground, so as to perform mowing operation (referred to as re-cutting) on the dense grass area again. It should be noted that the preset angle is an angle capable of ensuring that the autonomous mowing device completes the turn, and may be greater than 90 degrees and less than or equal to 180 degrees. In one implementation, the preset angle is 180 degrees to improve the working efficiency of the autonomous mowing device. In addition, when lowering the height of the cutting deck relative to the ground to perform mowing operation, the height of the cutting deck relative to the ground may be lowered by a preset minimum height value that the cutting deck can be adjusted by each time the autonomous mowing device turns. In one implementation, when lowering the height of the cutting deck relative to the ground to perform mowing operation, the height of the cutting deck relative to the ground may be lowered to the height value set by the user each time the autonomous mowing device turns, according to the height value set by the user.

In one implementation, if the state in which the cutting load represented by the operating parameter is less than the first preset load satisfies the preset condition, controlling the autonomous mowing device to turn by the preset angle comprises: if the duration of the state in which the cutting load represented by the operating parameter is less than the first preset load is greater than or equal to the preset duration, and the traveled distance of the autonomous mowing device in the corresponding state is greater than or equal to the preset distance threshold, controlling the autonomous mowing device to turn by the preset angle.

When the cutting load represented by the operating parameter is less than the first preset load, it indicates that the cutting height of the autonomous mowing device for the current working area can be lowered, i.e., the height of the cutting deck relative to the ground can be lowered. However, when the cutting deck is raised to a height higher than the grass and the autonomous mowing device cuts at this height, if it is determined that turning is required solely based on the cutting load represented by the operating parameter being less than the first preset load, the autonomous mowing device may turn as soon as it enters the dense grass area, affecting the user experience.

The reason is that when the height of the cutting deck is higher than the grass, a light load phenomenon occurs, i.e., the cutting load represented by the operating parameter is less than the first preset load, and based on the light load, it cannot be determined whether the entire dense grass area has been traversed.

It can be understood that from the perspective of work efficiency and user experience, the user expects the autonomous mowing device to cut along a path once and cut through one path of the dense grass area, i.e., traverse the entire dense grass area. Therefore, in this embodiment, whether turning is required is determined based on the forward moving distance or time of the autonomous mowing device, combined with the duration of the load state. Exemplarily, the following description takes the preset duration as 3 s, the preset distance threshold as 1 m, and the height of the cutting deck relative to the ground being higher than the height of grass as an example. Referring to FIG. 4(a), if the length of the dense grass area 3 is 1 m, the autonomous mowing device 1 may be controlled to turn when the state in which the cutting load represented by the operating parameter of the autonomous mowing device 1 is less than the first preset load lasts for at least 3 s and the autonomous mowing device 1 has traveled at least 1 m in the corresponding state, so that the autonomous mowing device 1 just completes cutting of the dense grass area 3 once and then turns. Referring to FIG. 4(b), if the length of the dense grass area 3 is 0.8 m, the autonomous mowing device 1 may be controlled to turn when the state in which the cutting load represented by the operating parameter of the autonomous mowing device 1 is less than the first preset load lasts for at least 3 s and the autonomous mowing device 1 has traveled at least 1 m in the corresponding state, so that the autonomous mowing device 1 completes cutting of the dense grass area once and moves beyond a certain distance before turning. Referring to FIG. 4(c), if the length of the dense grass area 3 is 1.5 m, and if the state in which the cutting load represented by the operating parameter of the autonomous mowing device 1 is less than the first preset load lasts for at least 3 s and the autonomous mowing device 1 has traveled at least 1 m in the corresponding state, the autonomous mowing device 1 is controlled to turn, so that the autonomous mowing device 1 turns before completing cutting of the dense grass area. Here, with continued reference to FIG. 4(c), if the height of the cutting deck relative to the ground is lower than the height of grass, although the autonomous mowing device 1 has traveled 1 m, the state in which the cutting load represented by the operating parameter of the autonomous mowing device 1 is less than the first preset load lasts for less than 3 s, it is determined that the autonomous mowing device 1 has not yet exited the dense grass area 3, and the autonomous mowing device 1 is controlled to continue moving forward until the state in which the cutting load represented by the operating parameter is less than the first preset load lasts for at least 3 s and the autonomous mowing device 1 has traveled at least 1 m in the corresponding state.

Step S103: when it is detected that the height of the cutting deck relative to the ground is equal to a preset expected cutting height, the dense grass cutting mode is exited.

It can be understood that when it is detected that the height of the cutting deck relative to the ground is equal to the preset expected cutting height, it indicates that only one more mowing operation needs to be performed on the dense grass area at the height of the cutting deck relative to the ground, and the height of grass in the dense grass area will be cut to the expected cutting height; at this time, the dense grass cutting mode may be exited.

In summary, in the method provided in the above embodiments, after entering the dense grass cutting mode, the height of the cutting deck relative to the ground is adaptively adjusted according to the operating parameter of the autonomous mowing device, and then the autonomous mowing device is controlled to perform mowing operation on the dense grass area at the adjusted height of the cutting deck relative to the ground, so that the dense grass area can be effectively cut, no missed cutting area is generated, and manual operation is not required, thereby improving coverage rate of treatment for the dense grass area.

In one implementation, the cutting load represented by the operating parameter being less than the first preset load comprises: the rotational speed is greater than a first preset rotational speed threshold, and/or the torque is less than a preset torque. The first preset rotational speed threshold and the preset torque may be set according to actual needs, for example, the first preset rotational speed threshold may be set to 90% of the normal rotational speed, and the preset torque may be set to 80, etc. In one embodiment, the normal rotational speed may be the rotational speed when the cutting deck is idling (the height of the cutting deck relative to the ground is higher than the height of grass). In one embodiment, the normal rotational speed may be the rotational speed of the cutting deck when the height of the cutting deck relative to the ground is the same as the height of grass and the autonomous mowing device is cutting grass. In one embodiment, the normal rotational speed may be the rotational speed of the cutting deck when the height of the cutting deck relative to the ground and the height of grass satisfy a preset height difference condition and the autonomous mowing device is cutting grass.

In one implementation, after raising the height of the cutting deck relative to the ground and performing mowing operation at the raised height of the cutting deck relative to the ground, the method further comprises:
detecting the operating parameter of the autonomous mowing device;
when a duration of the state in which the cutting load represented by the operating parameter is less than the first preset load is less than a preset duration, if the height of the cutting deck relative to the ground is not a highest height of the cutting deck relative to the ground, controlling the height of the cutting deck relative to the ground to be raised;
repeating the above steps, and when the cutting load represented by the operating parameter is greater than or equal to the first preset load after the cutting deck is raised, performing mowing operation at the raised height of the cutting deck relative to the ground.

After raising the height of the cutting deck relative to the ground and performing mowing operation at the raised height of the cutting deck relative to the ground, the operating parameter of the autonomous mowing device may be detected in real time or irregularly; when the duration of the state in which the cutting load represented by the operating parameter is less than the first preset load is less than the preset duration, it indicates that based on the current height of the cutting deck relative to the ground, the cutting load of the autonomous mowing device is still relatively large; if the current height of the cutting deck relative to the ground is not the highest height of the cutting deck relative to the ground, the height of the cutting deck relative to the ground is controlled to be raised, and after the height of the cutting deck relative to the ground is raised, the operating parameter of the autonomous mowing device is continuously detected; if the duration of the state in which the cutting load represented by the operating parameter is less than the first preset load is still less than the preset duration after the cutting deck is raised, the height of the cutting deck relative to the ground is continuously controlled to be raised, i.e., the above steps are repeated; if the cutting load represented by the operating parameter is greater than or equal to the first preset load after the cutting deck is raised, it indicates that the autonomous mowing device can perform normal cutting of grass, i.e., the cutting load of the autonomous mowing device is normal, and mowing operation is performed at the raised height of the cutting deck relative to the ground.

Here, the cutting load represented by the operating parameter being greater than or equal to the first preset load comprises: the rotational speed is less than the first preset rotational speed threshold, and/or the torque is greater than the preset torque. In this way, the height of the cutting deck relative to the ground is gradually raised according to the cutting load represented by the operating parameter of the autonomous mowing device, thereby improving the working efficiency of the autonomous mowing device.

In one implementation, after lowering the height of the cutting deck relative to the ground to perform mowing operation, the method further comprises:
when it is detected that the height of the cutting deck relative to the ground is higher than the expected cutting height, detecting the operating parameter of the autonomous mowing device;
if the duration of the state in which the cutting load represented by the operating parameter is less than the first preset load is less than the preset duration, controlling the autonomous mowing device to turn by the preset angle, and lowering the height of the cutting deck relative to the ground to perform mowing operation.

When the autonomous mowing device performs mowing operation at the lowered height of the cutting deck relative to the ground, and the height of the cutting deck relative to the ground is higher than the expected cutting height, the operating parameter of the autonomous mowing device may be detected in real time or irregularly; if the duration of the state in which the cutting load represented by the operating parameter is less than the first preset load is less than the preset duration, it indicates that the autonomous mowing device may have traveled out of the dense grass area, and the autonomous mowing device is controlled to turn by the preset angle and lower the height of the cutting deck relative to the ground, so as to perform mowing operation at the lowered height of the cutting deck relative to the ground. It should be noted that, based on different preset angles, after the autonomous mowing device is controlled to turn by the preset angle, the working path of the autonomous mowing device may be the same as the previous working path, or may partially overlap with the previous working path. In this way, the dense grass area can be effectively cut, while the cutting efficiency of the dense grass area is improved.

In one implementation, the method further comprises:
in the dense grass cutting mode, when the duration of the state in which the cutting load represented by the operating parameter is less than the first preset load is less than the preset duration, exiting the dense grass cutting mode.

It can be understood that when the duration of the state in which the cutting load represented by the operating parameter is less than the first preset load is less than the preset duration, it indicates that the autonomous mowing device may have completed the mowing operation of the dense grass area, and the dense grass cutting mode may be exited so that the autonomous mowing device can cut the working area in a normal mode.

In one implementation, in the dense grass cutting mode, after exiting the dense grass cutting mode when the duration of the state in which the cutting load represented by the operating parameter is less than the first preset load is less than the preset duration, the method further comprises:
re-planning a working path of the working area based on a position of the autonomous mowing device in the working area;
controlling the autonomous mowing device to leave the dense grass area according to the working path; wherein the working path is used to control movement and/or operation of the autonomous mowing device in a non-dense grass area.

After exiting the dense grass cutting mode, it indicates that cutting of the current dense grass area in the working area has been completed; then, based on the position of the autonomous mowing device in the working area, a working path of the working area is re-planned, and the autonomous mowing device is controlled to leave the current dense grass area according to the working path, and then movement and/or operation of the autonomous mowing device in the non-dense grass area is controlled according to the working path, thereby achieving rapid cutting of the working area and further improving work efficiency.

In one implementation, before entering the dense grass cutting mode, the method further comprises:
when the cutting load represented by the operating parameter is greater than the first preset load, controlling the autonomous mowing device to reduce a traveling speed.

The cutting load represented by the operating parameter being greater than the first preset load comprises: the rotational speed is less than the first preset rotational speed threshold, and/or the torque is greater than the preset torque. When the cutting load represented by the operating parameter is greater than the first preset load, it indicates that the cutting load of the autonomous mowing device may be relatively large; in order to ensure that the autonomous mowing device can cut the grass as cleanly as possible, the autonomous mowing device may be controlled to reduce the traveling speed, for example, the traveling speed of the autonomous mowing device may be reduced to 80% of the normal traveling speed, etc.

In one implementation, before entering the dense grass cutting mode, the method further comprises:
when the cutting load represented by the operating parameter is greater than a second preset load, entering the dense grass cutting mode;
wherein the second preset load is greater than the first preset load.

The operating parameter includes the rotational speed; the cutting load represented by the operating parameter being greater than the second preset load comprises: the rotational speed is less than a second preset rotational speed threshold. Here, the second preset rotational speed threshold is less than the first preset rotational speed threshold. It can be understood that when the cutting load represented by the operating parameter is greater than the second preset load, and the second preset load is greater than the first preset load, it indicates that the cutting load of the autonomous mowing device is relatively large, and the autonomous mowing device cannot cut the grass cleanly or the cutting speed is slow even after reducing the traveling speed; then the autonomous mowing device is triggered to enter the dense grass cutting mode to perform layered cutting of the dense grass area.

In one implementation, before or after entering the dense grass cutting mode, the method further comprises:
when the cutting load represented by the operating parameter is greater than a third preset load and the cutting load is less than the second preset load, controlling the autonomous mowing device to stop and wait;
when the cutting load represented by the operating parameter is less than or equal to the third preset load, controlling the autonomous mowing device to continue mowing operation.

The cutting load represented by the operating parameter being greater than the third preset load and the cutting load being less than the second preset load may be that the rotational speed is less than a third preset rotational speed threshold and greater than the second preset rotational speed threshold. When the cutting load represented by the operating parameter is greater than the third preset load and the cutting load is less than the second preset load, it indicates that the rotational speed of the cutting deck is relatively low; then the autonomous mowing device may be controlled to stop and wait for the rotational speed of the cutting deck to return to normal. When the cutting load represented by the operating parameter is less than or equal to the third preset load, i.e., the rotational speed is greater than or equal to the third preset rotational speed threshold, it indicates that the rotational speed of the cutting deck has been restored; then the autonomous mowing device is controlled to continue mowing operation. In this way, based on the cutting load represented by the operating parameter, the autonomous mowing device is controlled accordingly, so as to improve the working efficiency of the autonomous mowing device as much as possible while protecting the autonomous mowing device.

In one implementation, after exiting the dense grass cutting mode when it is detected that the height of the cutting deck relative to the ground is equal to the preset expected cutting height, the method further comprises:
planning a working path for an unworked area in the working area based on a position of the autonomous mowing device in the working area;
controlling the autonomous mowing device to move and/or work in the working area according to the working path.

After exiting the dense grass cutting mode, it indicates that cutting of the current dense grass area has been completed; then, based on the position of the autonomous mowing device in the working area, a working path is planned for the unworked area in the working area, and the autonomous mowing device is controlled to move and/or work in the working area according to the working path, thereby achieving rapid cutting of the unworked area in the working area and further improving work efficiency.

In one implementation, the operating parameter includes a motor temperature; the method further comprises:
when the motor temperature is greater than a preset temperature threshold, re-planning a working path of the working area based on a position of the autonomous mowing device in the working area;
controlling the autonomous mowing device to leave the dense grass area according to the working path; wherein the working path is used to control movement and/or operation of the autonomous mowing device in a non-dense grass area.

When the motor temperature is greater than the preset temperature threshold, it indicates that the cutting deck is overheated; in order to protect the cutting deck, based on the position of the autonomous mowing device in the working area, a working path of the working area may be re-planned, and the autonomous mowing device is controlled to leave the dense grass area according to the working path, so as to control movement and/or operation of the autonomous mowing device in the non-dense grass area. In this way, the service life of the autonomous mowing device can be effectively extended.

Based on the same inventive concept as the foregoing embodiments, the foregoing embodiments are described in detail below through a specific example, and in this example, the autonomous mowing device is an automatic lawn mower.

The operation control method provided in this example mainly includes the following three processes:

### Dense grass perception

The automatic lawn mower performs full-coverage work within the working area using a boustrophedon path, and detects operating parameters of the automatic lawn mower, such as the rotational speed of the cutting deck and the torque of the cutting motor, in real time as detection conditions for triggering dense grass. When it is detected that operating parameter values (also referred to as dense grass detection values) satisfy a first threshold condition (e.g., the torque is greater than a first torque threshold, and/or the rotational speed is less than a first rotational speed threshold), a dense grass speed reduction cutting stage is triggered. During the dense grass speed reduction cutting stage, if it is detected that the operating parameter values satisfy a second threshold condition (e.g., the torque is greater than a second torque threshold, and the rotational speed is less than a second rotational speed threshold), a dense grass layered cutting stage is triggered.

When it is detected that the operating parameter values satisfy the first threshold condition, the drive wheel may be controlled to decelerate to achieve speed reduction cutting. During the speed reduction cutting process, if it is detected that the operating parameter values do not satisfy the first threshold (e.g., the torque is less than or equal to the first torque threshold, and the rotational speed is greater than or equal to the first rotational speed threshold), the drive wheel speed is restored to normal; if it is detected that the operating parameter values satisfy the second threshold condition, layered dense grass cutting logic may be triggered.

The rotational speed being less than the first rotational speed threshold may be that the rotational speed of the cutting deck is lower than 90% of the normal rotational speed, and the torque being greater than the first torque threshold may be that the torque is greater than 80, etc.; when either of the two reaches the corresponding threshold, dynamic speed reduction processing is performed (the minimum speed can be reduced to 70% of the normal rotational speed). The operating parameter values satisfying the second threshold condition may be that the rotational speed of the cutting deck is lower than 55% of the normal rotational speed.

### (II) Dense grass cutting

### Dense grass speed reduction cutting stage

After the dense grass detection values satisfy the first threshold condition, the dense grass speed reduction cutting stage is entered, and at this time, the drive wheel speed may be reduced by 20% for cutting. During this cutting process, if the cutting deck motor overheats, the automatic lawn mower may stop and wait. If, during the speed reduction cutting process, the dense grass detection values do not satisfy the first threshold condition, the drive wheel speed may be restored to normal. If the dense grass detection values satisfy the second threshold condition, the dense grass layered cutting stage is entered.

### Dense grass layered cutting stage

After entering the dense grass layered cutting stage, the automatic lawn mower is first controlled to stop, and the cutting deck is raised to the highest gear (i.e., the maximum height to which the cutting deck can be raised), and then the cutting deck is started for speed reduction cutting. At the same time, the dense grass detection values are detected in real time; if the dense grass detection values do not satisfy the second threshold condition, and it is determined that the distance traveled after entering the dense grass layered cutting stage is greater than 1 m, the automatic lawn mower stops, turns 180 degrees, lowers the cutting deck (by the minimum adjustable precision of the cutting deck, 5 mm), and starts the cutting deck again for reciprocating cutting, until the current cutting deck height is the cutting deck height set by the user, and then normal cutting is resumed. If, during the dense grass layered cutting stage, the dense grass detection values satisfy the second threshold condition, the dense grass cutting mode is exited.

In addition, during the cutting process (including the dense grass cutting and speed reduction cutting stages), if it is detected that the rotational speed of the cutting deck is lower than 60% of the normal rotational speed, the automatic lawn mower stops and waits for the rotational speed of the cutting deck to be restored before cutting. At the same time, if it is detected that the cutting deck is overheated (0-100% of the temperature threshold that the cutting deck can withstand), for example, greater than 80% of the temperature threshold, escape processing is performed, i.e., the path is re-planned to exit the current dense grass area.

Referring to FIG. 7, which is a specific process schematic diagram of the operation control method provided in this embodiment, comprising the following steps:
step S201: normal raster cutting is performed.
step S202: dense grass is detected, and the speed is reduced by 20% for cutting.

Here, detecting dense grass may be detecting that the torque is greater than a first torque threshold, and/or the rotational speed of the cutting deck is less than a first rotational speed threshold.
step S203: it is detected that the rotational speed of the cutting deck is lower than 60%, and the automatic lawn mower stops to wait for the rotational speed to be restored.
step S204: it is detected that the rotational speed of the cutting deck is lower than 55%, and the dense grass cutting mode is entered.

Here, when it is detected that the rotational speed of the cutting deck is lower than 55%, the dense grass cutting mode is entered to perform dense grass layered cutting.
step S205: the cutting deck is raised to the highest gear.
step S206: the rotational speed of the cutting deck is monitored in real time.
step S207: when it is detected that the rotational speed is greater than 55% for a duration greater than 3 s and the traveled distance is greater than 1 m, the automatic lawn mower turns and lowers the cutting deck.

Specifically, when it is detected that the rotational speed of the cutting deck is greater than 55% for a duration greater than 3 s, and the traveled distance of the automatic lawn mower in this state is greater than 1 m, the automatic lawn mower turns 180 degrees and lowers the height of the cutting deck relative to the ground.
step S208: it is judged whether the height of the cutting deck relative to the ground is the expected cutting height; when yes, step S209 is executed; otherwise, step S206 is executed.
step S209: the dense grass cutting mode is exited.

In summary, in the method provided in the above embodiments, the actual rotational speed and torque of the cutting deck are detected in real time as detection conditions for triggering dense grass (i.e., detecting the load). When it is detected that the actual load value satisfies a first threshold condition, the drive wheel speed is reduced for cutting. During the speed reduction cutting process, if the detected actual load value does not satisfy the first threshold condition, the normal drive wheel speed is restored; if the detected actual load value satisfies a second threshold condition (the load corresponding to the second threshold condition is greater than the load corresponding to the first threshold condition), layered dense grass cutting logic is triggered (i.e., the cutting deck is raised to sequentially cut the dense grass area in layers), ensuring that the automatic lawn mower can effectively cut the dense grass area without missing grass, i.e., can effectively cut cleanly the grass missed due to the dense grass, thereby improving coverage rate of treatment for the dense grass area and reducing mowing operation costs.

Based on the same inventive concept as the foregoing embodiments, an embodiment of the present invention provides an autonomous mowing device. As shown in FIG. 8, the autonomous mowing device includes: a processor 310 and a memory 311 storing a computer program; wherein the processor 310 shown in FIG. 8 is not intended to indicate that the number of processors 310 is one, but merely to indicate a positional relationship of the processor 310 relative to other components; in actual applications, the number of processors 310 may be one or more; similarly, the memory 311 shown in FIG. 8 also has the same meaning, i.e., merely to indicate a positional relationship of the memory 311 relative to other components; in actual applications, the number of memories 311 may be one or more. When the processor 310 runs the computer program, the operation control method applied to the above autonomous mowing device is implemented.

The autonomous mowing device may further include: at least one network interface 312. The various components in the autonomous mowing device are coupled together through a bus system 313. It can be understood that the bus system 313 is used to implement connection and communication between these components. In addition to a data bus, the bus system 313 further includes a power bus, a control bus, and a status signal bus. However, for the sake of clarity, various buses are labeled as the bus system 313 in FIG. 8.

The memory 311 may be a volatile memory or a non-volatile memory, or may include both volatile and non-volatile memories. The non-volatile memory may be a read only memory (ROM), a programmable read only memory (PROM), an erasable programmable read only memory (EPROM), an electrically erasable programmable read only memory (EEPROM), a ferromagnetic random access memory (FRAM), a flash memory, a magnetic surface memory, an optical disc, or a compact disc read only memory (CD-ROM); the magnetic surface memory may be a magnetic disk memory or a magnetic tape memory. The volatile memory may be a random access memory (RAM), which serves as an external cache. By way of exemplary but not limiting description, many forms of RAM are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a sync link dynamic random access memory (SLDRAM), a direct rambus random access memory (DRRAM). The memory 311 described in the embodiments of the present invention is intended to include, but is not limited to, these and any other suitable types of memory.

The memory 311 in the embodiments of the present invention is configured to store various types of data to support operations of the autonomous mowing device. Examples of such data include: any computer program for operating on the autonomous mowing device, such as an operating system and application programs; contact data; phonebook data; messages; pictures; videos, etc. The operating system includes various system programs, such as a framework layer, a core library layer, a driver layer, etc., for implementing various basic services and processing hardware-based tasks. The application programs may include various application programs, such as a media player, a browser, etc., for implementing various application services. Here, the program for implementing the method of the embodiments of the present invention may be included in the application programs.

In addition, the autonomous mowing device further includes a mowing assembly and an adjustment assembly for adjusting the height of the mowing assembly relative to the ground; the processor is configured to control the mowing assembly and the adjustment assembly.

Based on the same inventive concept as the foregoing embodiments, this embodiment further provides a computer storage medium, wherein the computer storage medium stores a computer program. The computer storage medium may be a ferromagnetic random access memory (FRAM), a read only memory (ROM), a programmable read only memory (PROM), an erasable programmable read only memory (EPROM), an electrically erasable programmable read only memory (EEPROM), a flash memory, a magnetic surface memory, an optical disc, or a compact disc read only memory (CD-ROM), or other memories; or may be various devices including one or any combination of the above memories, such as a mobile phone, a computer, a tablet device, a personal digital assistant, etc. When the computer program stored in the computer storage medium is run by a processor, the operation control method applied to the above autonomous mowing device is implemented. For specific step procedures implemented when the computer program is executed by the processor, please refer to the description of the embodiment shown in FIG. 2, which will not be repeated here.

The technical features of the above embodiments may be combined arbitrarily. For the sake of brevity, not all possible combinations of the technical features in the above embodiments are described; however, as long as there is no contradiction in the combination of these technical features, it should be considered as within the scope of this description.

In this document, the terms "comprises," "comprising," or any other variation thereof are intended to cover a non-exclusive inclusion, including not only the listed elements, but also other elements not expressly listed.

The above description is only specific embodiments of the present invention, but the protection scope of the present invention is not limited thereto. Any person skilled in the art can easily conceive of changes or substitutions within the technical scope disclosed in the present invention, and these should all be covered within the protection scope of the present invention. Therefore, the protection scope of the present invention should be subject to the protection scope of the claims.

## Claims

1. A control method for an autonomous mowing device, wherein the method comprises:
acquiring load information of a cutting motor;
in response to the load information satisfying a first preset condition, raising a height of a cutting deck relative to the ground, the first preset condition indicating that the autonomous mowing device enters an overloaded area;
controlling the autonomous mowing device to continue mowing operation at the raised height of the cutting deck;
in response to the load information satisfying a second preset condition, lowering the height of the cutting deck relative to the ground and controlling a moving assembly to turn by a preset angle;
controlling the autonomous mowing device to perform mowing operation on a first path at the lowered height of the cutting deck, wherein the first path refers to a path along which the autonomous mowing device has moved at the raised height of the cutting deck.

2. The method of claim 1, wherein the second preset condition at least comprises a condition indicating that the autonomous mowing device passes through the overloaded area.

3. The method of any one of claims 1-2, wherein indicating that the mowing device passes through the overloaded area comprises one of:
a load is less than a first preset load;
the load is less than the first preset load, and a duration of continuous operation during which the load is less than the first preset load satisfies a preset time; or, the load is less than the first preset load, and a distance of continuous operation during which the load is less than the first preset load satisfies a preset length; or, the load is less than the first preset load, and the duration of continuous operation during which the load is less than the first preset load satisfies a preset duration and a distance of operation during which the load is less than the first preset load satisfies a preset distance; and
the autonomous device moves to an end point of a target path.

4. The method of any one of claims 1-3, wherein the target path refers to a path that terminates at a boundary of a working area.

5. The method of claim s 1-4, wherein the preset angle is 180 degrees or 90 degrees.

6. The method of any one of claims 1-5, wherein raising the height of the cutting deck relative to the ground comprises one of:
controlling the cutting deck to be raised to a maximum height; and
controlling the cutting deck to be raised step by step according to graduated lifting strategy; wherein the graduated lifting strategy comprises a fixed height value raising rule and a non-fixed height value raising rule.

7. The method of any one of claims 1-6, wherein controlling the cutting deck to be raised step by step according to the graduated lifting strategy comprises: controlling the cutting deck to be raised by a non-fixed height value.

8. The method of any one of claims 1-7, wherein controlling the cutting deck to be raised by the non-fixed height value comprises:
determining a height value to be raised according to a current height of the cutting deck, and/or according to a difference between the current height and a target height, and controlling the cutting deck to be raised from the current height to a corresponding height according to the height value to be raised.

9. The method of any one of claims 1-8, wherein the height value to be raised is inversely correlated with the current height; or, the height value to be raised is positively correlated with the difference between the current height and the target height.

10. The method of any one of claims 1-9, wherein the method further comprises:
judging whether a corresponding height after raising according to the graduated lifting strategy is greater than a maximum height to which the cutting deck can be raised, and when yes, controlling the cutting deck to be raised to the maximum height.

11. The method of any one of claims 1-10, wherein the method further comprises:
judging whether the first path is a re-cutting path, wherein the re-cutting path refers to a path on which the autonomous mowing device has performed mowing operation on at least a portion of the first path at the lowered height of the cutting deck;
when yes, marking the first path and waiting for subsequent processing;
when not, controlling the mowing device to perform mowing operation on the first path at the lowered height of the cutting deck.

12. The method of any one of claims 1-11, wherein, in response to the load information satisfying the second preset condition, lowering the height of the cutting deck relative to the ground comprises:
judging whether a difference between a current height of the cutting deck and a height set by a user satisfies a threshold condition,
when yes, controlling the autonomous mowing device to control the autonomous mowing device to lower the cutting deck to the height set by the user, and continuing to work;
when not, controlling the autonomous mowing device to perform mowing operation on the first path at the lowered height of the cutting deck.

13. The method of any one of claims 1-12, wherein, before raising the height of the cutting deck relative to the ground, the method further comprises: taking at least one pre-measures to attempt to pass through the overloaded area, the pre-measures comprising;
A: reducing a moving speed of the autonomous mowing device;
B: controlling the autonomous mowing device to reverse by a preset distance or for a preset time.

14. The method of any one of claims 1-13, wherein, when the mowing device adopts the pre-measure B, the method further comprises:
after reversing by the preset distance or for the preset time, controlling the autonomous mowing device to continue moving forward;
judging whether a forward distance is greater than a reversed distance;
when not, executing the step of raising the height of the cutting deck relative to the ground.

15. The method of any one of claims 1-14, wherein, before raising the height of the cutting deck relative to the ground, the method further comprises:
controlling the cutting deck to stop working and controlling the mowing device to stop moving.

16. The method of any one of claims 1-15, wherein reducing the moving speed of the mowing device comprises:
reducing the moving speed of the mowing device step by step according to a preset gradient speed reduction rule until the moving speed of the mowing device is reduced to a lowest speed.

17. The method of any one of claims 1-16, wherein the method further comprises:
in response to the load information satisfying a third preset condition, controlling the mowing device to reduce a moving speed.

18. The method of any one of claims 1-17, wherein the method further comprises:
in response to the load information satisfying a fourth preset condition, reversing by a set distance d, and then moving forward.

19. The method of any one of claims 1-18, wherein controlling the autonomous mowing device to reduce a moving speed comprises: controlling the autonomous mowing device to reduce the moving speed according to a preset relationship between a moving speed of the autonomous mowing device and a load.

20. A control method for an autonomous mowing device, wherein the method comprises:
acquiring load information of a cutting motor;
in response to the load information satisfying a first preset condition, controlling a cutting deck to be raised to a raised heigh, wherein the first preset condition is indicating that the autonomous mowing device enters an overloaded area;
controlling the autonomous mowing device to perform mowing operation on the overloaded area at the raised height of the cutting deck;
in response to the load information satisfying a second preset condition, judging whether a difference between a height of the cutting deck of the autonomous mowing device after being lowered and a height set by a user is within a threshold range; wherein the second preset condition is indicating that the autonomous mowing device passes through the overloaded area by means of raising the cutting deck;
when yes, controlling the autonomous mowing device to lower the cutting deck to a target height, and continuing to work at the lowered height of the cutting deck.

21. The method of claim 20, the method further comprises:
when not, controlling the mowing device to perform mowing operation on the overloaded area at the lowered height of the cutting deck.
